(19) **Europäisches Patentamt**
**European Patent Office**
**Office européen des brevets**

(11) **EP 4 668 890 A1**

(12) **EUROPEAN PATENT APPLICATION**
published in accordance with Art. 153(4) EPC

(43) Date of publication:
**24.12.2025 Bulletin 2025/52**

(21) Application number: **24757272.0**

(22) Date of filing: **15.02.2024**

(51) International Patent Classification (IPC):
$H04W\ 52/02^{(2009.01)}$ $\quad H04W\ 72/23^{(2023.01)}$
$H04W\ 72/21^{(2023.01)}$ $\quad H04B\ 7/06^{(2006.01)}$
$H04B\ 7/08^{(2006.01)}$ $\quad H04W\ 72/231^{(2023.01)}$
$H04W\ 72/12^{(2023.01)}$ $\quad H04L\ 5/00^{(2006.01)}$

(52) Cooperative Patent Classification (CPC):
H04B 7/06; H04B 7/08; H04L 5/00; H04W 52/02;
H04W 72/12; H04W 72/21; H04W 72/23;
H04W 72/231

(86) International application number:
**PCT/KR2024/095195**

(87) International publication number:
**WO 2024/172552 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.02.2023  KR 20230020338
06.04.2023  KR 20230045663
12.05.2023  KR 20230061960**

(71) Applicant: **LG Electronics Inc.
Yeongdeungpo-gu
Seoul 07336 (KR)**

(72) Inventors:
• **KIM, Seonwook
Seoul 06772 (KR)**
• **LEE, Youngdae
Seoul 06772 (KR)**
• **KIM, Kijun
Seoul 06772 (KR)**
• **KIM, Hyungtae
Seoul 06772 (KR)**
• **YANG, Suckchel
Seoul 06772 (KR)**
• **KANG, Jiwon
Seoul 06772 (KR)**
• **GO, Seongwon
Seoul 06772 (KR)**

(74) Representative: **Jung, Minkyu
Wuesthoff & Wuesthoff
Patentanwälte und Rechtsanwalt PartG mbB
Schweigerstraße 2
81541 München (DE)**

(54) **APPARATUS AND METHOD FOR PERFORMING COMMUNICATION ACCORDING TO MODE RELATED TO ENERGY SAVING IN WIRELESS COMMUNICATION SYSTEM**

(57)    The present disclosure is to perform communication according to a mode related to energy saving in a wireless communication system, and a method performed by a terminal may comprise the steps of: receiving configuration information for configuring a transmission configuration indication (TCI)-related parameter; receiving control information including the TCI-related parameter; identifying a reference signal (RS) indicated by the TCI-related parameter; and transmitting or receiving a signal related to the control information on the basis of the RS. The configuration information may indicate, for one value of the TCI-related parameter, a first RS or a first radio resource applied to a first time interval, and a second RS or a second radio resource applied to a second time interval.

EP 4 668 890 A1

# FIG. 27

base station
(2720)

UE
(2710)

Configure TCI state index#N with
CSI-RS resource index#1 as QCL source
for mode#A and CSI-RS resource
index#2 as QCL source for mode#B(S2701)

Mode switching indication
from mode#A to mode#B(S2703)

S2705 — Receive PDSCH scheduled
with TCI state index#N,
by applying CSI-RS resource
index#2 as QCL source

Mode switching indication
from mode#B to mode#A(S2707)

S2709 — Receive PDSCH scheduled
with TCI state index#N,
by applying CSI-RS resource
index#1 as QCL source

Description

## TECHNICAL FIELD

The following description relates to a wireless communication system, and to a device and a method for performing communication according to a mode related to energy saving in the wireless communication system.

## BACKGROUND ART

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

## DISCLOSURE

## TECHNICAL PROBLEM

The present disclosure relates to a device and a method for performing communication according to a mode related to energy saving in a wireless communication system.

The present disclosure relates to a device and a method for switching a mode defined according to on/off of spatial elements in a wireless communication system.

The present disclosure relates to a device and a method for switching a mode according to a predefined rule in a wireless communication system.

The present disclosure relates to a device and a method for switching a mode according to a change of a configuration factor related to a mode in a wireless communication system.

The present disclosure relates to a device and a method for switching a mode according to a change of a sub-configuration for channel state information (CSI) reporting in a wireless communication system.

The present disclosure relates to a device and a method for switching a mode according to a change of a time interval in a wireless communication system.

The present disclosure relates to a device and a method for switching a mode according to a bandwidth part (BWP) in a wireless communication system.

The present disclosure relates to a device and a method for using a certain application time after transmission of an indicator for mode switching in a wireless communication system.

The present disclosure relates to a device and a method for interpreting a transmission configuration indication (TCI)-related parameter based on a mode in a wireless communication system.

The present disclosure relates to a device and a method for selectively applying a list of TCI-related parameters based on a mode in a wireless communication system.

The present disclosure relates to a device and a method for selecting a radio resource for a channel based on a mode in a wireless communication system.

The present disclosure relates to a device and a method for processing an invalid configuration by a mode in a wireless communication system.

The technical purposes to be achieved in the present disclosure are not limited to the matters mentioned above, and other technical problems not mentioned may be considered by those skilled in the art to which the technical configuration of the present disclosure is applied from the embodiments of the present disclosure to be described below.

## TECHNICAL SOLUTION

In one example of the present disclosure, a method performed by a UE in a wireless communication system may comprise: receiving configuration information for a configuration of a transmission configuration indication (TCI)-related parameter; receiving control information including the TCI-related parameter; checking a reference reference signal (RS) indicated by the TCI-related parameter; and transmitting or receiving a signal related to the control information based on the reference reference signal (RS). The configuration information may indicate a first reference RS or a first radio resource applied to a first time period and indicates a second reference RS or a second radio resource applied to a second time period for one value of the TCI-related parameter.

In one example of the present disclosure, a method performed by a UE in a wireless communication system may comprise a transceiver and a processor connected to the transceiver, wherein the processor may be configured to: receive configuration information for a configuration of a transmission configuration indication (TCI)-related parameter; receive control information including the TCI-related parameter; check a reference reference signal (RS) indicated by the TCI-related parameter; and transmit or receive a signal related to the control information based on the reference reference signal (RS), wherein the configuration information may indicate a first reference RS or a first radio resource applied to a first time period and indicates a second reference RS or a second radio resource applied to a second time period for one value of the TCI-related parameter.

In one example of the present disclosure, a communication device may comprise at least one processor, and at least one computer memory connected to the at least one processor and storing instructions that direct operations when executed by the at least one processor, the operations comprising: receiving configuration information for a configuration of a transmission configuration indication (TCI)-related parameter; receiving control information including the TCI-related parameter; checking a reference reference signal (RS) indicated by the TCI-related parameter; and transmitting or receiving a signal related to the control information based on the reference reference signal (RS). The configuration information may indicate a first reference RS or a first radio resource applied to a first time period and indicates a second reference RS or a second radio resource applied to a second time period for one value of the TCI-related parameter.

In one example of the present disclosure, a non-transitory computer-readable medium storing at least one instruction may comprise the at least one instruction executable by a processor, wherein the at least one instruction causing a device, the processor, to: receive configuration information for a configuration of a transmission configuration indication (TCI)-related parameter; receive control information including the TCI-related parameter; check a reference reference signal (RS) indicated by the TCI-related parameter; and transmit or receive a signal related to the control information based on the reference reference signal (RS), wherein the configuration information may indicate a first reference RS or a first radio resource applied to a first time period and indicates a second reference RS or a second radio resource applied to a second time period for one value of the TCI-related parameter.

The aspects described above of the present disclosure are merely some of the preferred embodiments of the present disclosure, and various embodiments reflecting the technical features of the present disclosure may be derived and understood by those skilled in the art based on the detailed description of the present disclosure described below.

## ADVANTAGEOUS EFFECTS

According to embodiments based on the present disclosure, the following effects may be achieved.

According to the present disclosure, energy consumption of a base station may be reduced.

The effects obtainable from the embodiments of the present disclosure are not limited to the effects mentioned above, and other effects not mentioned may be clearly derived and understood by those skilled in the art to which the technical configuration of the present disclosure is applied from the description of the embodiments of the present disclosure below. That is, unintended effects resulting from implementing the configuration described in the present disclosure may also be derived by those skilled in the art from the embodiments of the present disclosure.

## BRIEF DESCRIPTION OF THE DRAWINGS

FIG. 1 illustrates an example of a structure of a wireless communication system to which the present disclosure may be applied.

FIG. 2 illustrates an example of a wireless device applicable to the present disclosure.

FIG. 3 illustrates a frame structure in a wireless communication system to which the present disclosure may be applied.

FIG. 4 illustrates an example of a resource grid in a wireless communication system to which the present disclosure may be applied.

FIG. 5 illustrates an example of a physical resource block in a wireless communication system to which the present disclosure may be applied.

FIG. 6 illustrates an example of a slot structure in a wireless communication system to which the present disclosure may be applied.

FIG. 7 illustrates examples of physical channels used in a wireless communication system, to which the present disclosure may be applied, and an example of a general signal transmission and reception method using the physical channels.

FIG. 8 illustrates a diagram illustrating an example in which a physical channel is mapped in a slot to which various embodiments are applicable.

FIG. 9 illustrates an example of beams applicable to the present disclosure.

FIG. 10 illustrates an example of a downlink (DL) beam management (BM) procedure using a synchronization signal block (SSB) applicable to the present disclosure.

FIG. 11 illustrates an example of a DL BM procedure using a channel state information (CSI) reference signal (RS) applicable to the present disclosure.

FIG. 12 illustrates an example of a receive beam determination procedure of a UE applicable to the present disclosure.

FIG. 13 illustrates an example of a transmit beam determination procedure of a base station applicable to the present disclosure.

FIG. 14 illustrates an example of resource allocation in a time and frequency domain applicable to the present disclosure.

FIG. 15 illustrates an example of beam sweeping for uplink (UL) BM using a sounding reference signal (SRS) applicable to the present disclosure.

FIG. 16 illustrates an example of a UL BM procedure using an SRS applicable to the present disclosure.

FIG. 17 illustrates an example of an operation procedure of a base station supporting a network energy saving (NES) technology applicable to the present disclosure.

FIG. 18 illustrates an example of a procedure for CSI measurement and reporting applicable to the present disclosure.

FIG. 19a illustrates an example of subband-wise full duplex (SB-FD).

FIG. 19b illustrates an example of spectrum-sharing full duplex (SS-FD).

FIG. 20a illustrates an example of time resource allocation based on half duplex (HD) and SB-FD.

FIG. 20b illustrates an example of time resource allocation based on HD and SS-FD.

FIG. 21 illustrates an example of a procedure for switching a spatial element mode according to an embodiment of the present disclosure.

FIG. 22 illustrates an example of a procedure for switching a spatial element mode based on a time interval according to an embodiment of the present disclosure.

FIG. 23 illustrates an example of a procedure for switching a spatial element mode based on a time interval according to an embodiment of the present disclosure.

FIG. 24 illustrates an example of a procedure for performing communication based on interpretation of a transmission configuration indication (TCI)-related parameter according to a spatial element mode according to an embodiment of the present disclosure.

FIG. 25 illustrates an example of a procedure for a UE to perform communication based on a set of TCI-related parameters according to a spatial element mode according to an embodiment of the present disclosure.

FIG. 26 illustrates an example of a procedure for a UE to select a radio resource based on a spatial element mode according to an embodiment of the present disclosure.

FIG. 27 illustrates an example of a procedure for changing a mode based on an instruction for mode switching according to an embodiment of the present disclosure.

## MODE FOR INVENTION

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial.

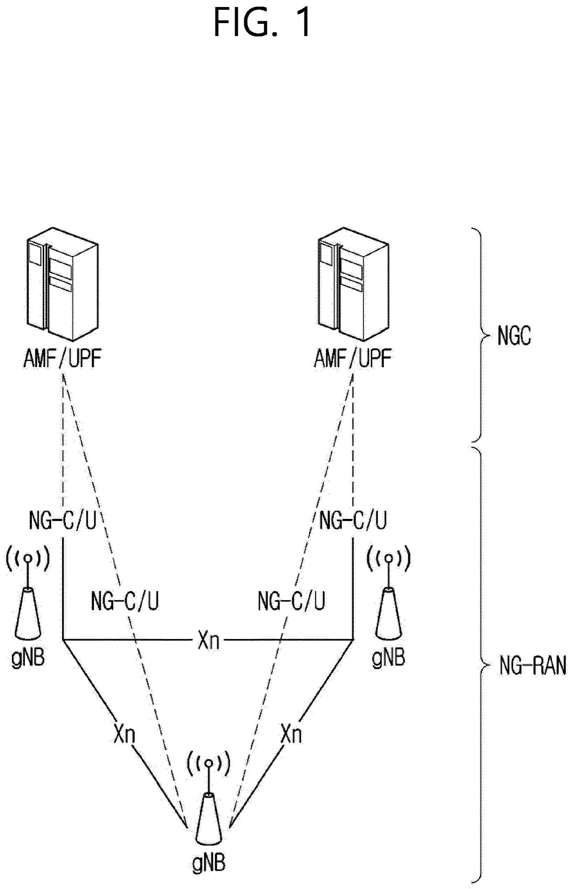

FIG. 1 exemplifies a structure of a wireless communication system to which the present disclosure may be applied. Referring to FIG. 1 , NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

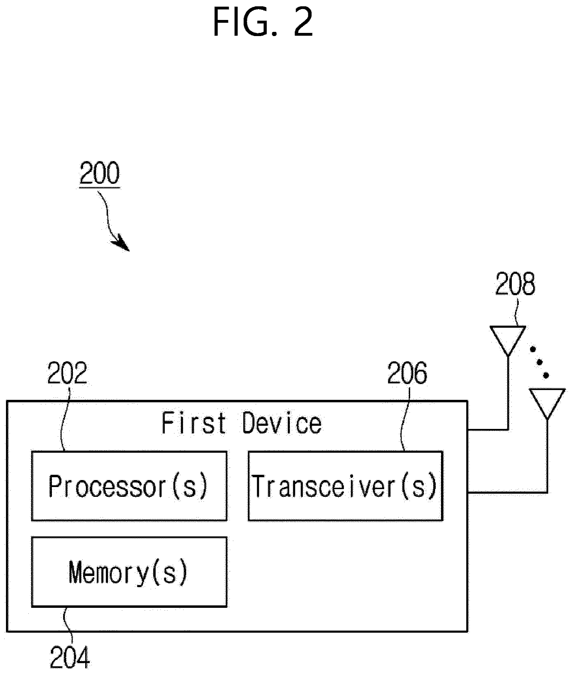

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

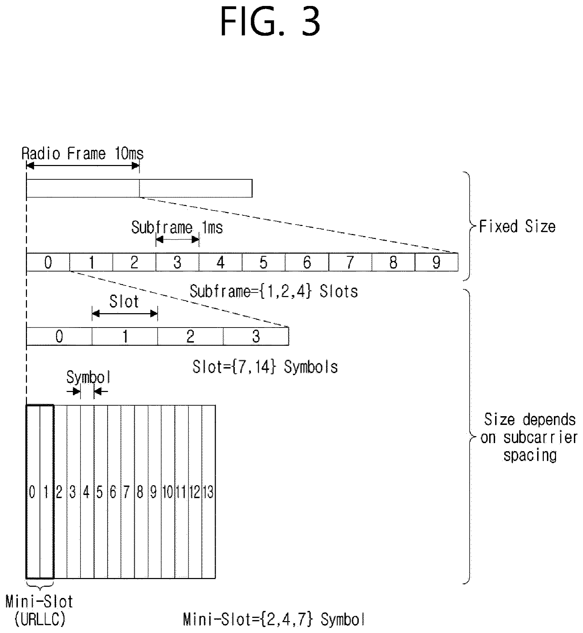

FIG. 3 exemplifies a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a default (reference) subcarrier spacing by an integer N (or μ). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | $\Delta f = 2^\mu \cdot 15[kHz]$ | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a dense-urban area, lower latency and a wider carrier bandwidth are supported, and when a SCS is 60 kHz or higher, a bandwidth wider than 24.25 GHz is supported to overcome a phase noise. An NR frequency band is defined as a frequency range in two types (FR1, FR2). FR1 and FR2 may be configured as in the following Table 2. In addition, FR2 may mean a millimeter wave (mmW).

[Table 2]

| Frequency Range designation | Corresponding frequency range | Subcarrier spacing |
|---|---|---|
| FR1 | 410MHz - 7125MHz | 15, 30, 60kHz |

(continued)

| Frequency Range designation | Corresponding frequency range | Subcarrier spacing |
|---|---|---|
| FR2 | 24250MHz - 52600MHz | 60, 120, 240kHz |

Regarding a frame structure in an NR system, sizes of various fields in a time domain are expressed as multiples of a time unit of $T_c=1/(\Delta f_{max} \cdot N_f)$. Here, $\Delta f_{max}$ is $480 \cdot 10^3$Hz and $N_f$ is 4096. Downlink and uplink transmission is configured (organized) with a radio frame having a duration of $T_f=1/(\Delta f_{max} \cdot N_f/100)T_c$=10ms. Here, the radio frame is configured with 10 subframes having a duration of $T_{sf}=(\Delta f_{max} \cdot N_f/1000)T_c$=1ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^\mu \in \{0, ..., N_{slot}^{subframe,\mu}-1\}$in a subframe and are numbered in an increasing order of $n_{s,f}^\mu \in \{0,\cdots, N_{slot}^{subframe,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that not all OFDM symbols of a downlink slot or an uplink slot are available.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 3 is an example on $\mu$=2 (SCS is 60 kHz), and referring to Table 3, 1 subframe may include 4 slots. 1 subframe={1,2,4} slot shown in FIG. 3 is an example, and the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part and the like may be considered. Hereinafter, the physical resources which may be considered in an NR system will be described in detail.

First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi co-location (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

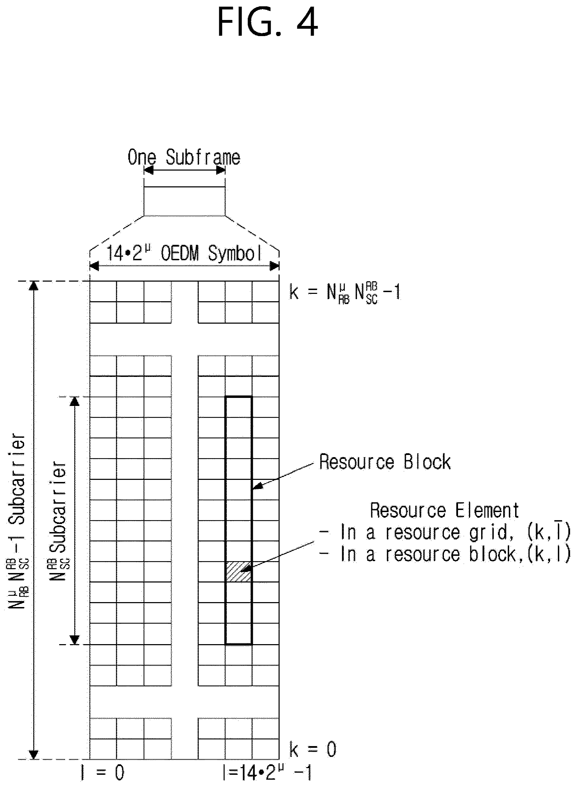

FIG. 4 exemplifies a resource grid in a wireless communication system to which the present disclosure may be applied.

Referring to FIG. 4, as an illustrative description, a resource grid is configured with $N_{RB}^\mu N_{SC}^{RB}$ subcarriers in a frequency domain, and one subframe is configured with $14 \cdot 2^\mu$ OFDM symbols, but the resource grid and the subframe are not limited thereto. In an NR system, a transmitted signal is described by one or more resource grids configured with

$2^{\mu}N_{symb}^{(\mu)}$ OFDM symbols and $N_{RS}^{\mu}N_{SC}^{RB}$ subcarriers. Here, $N_{RB}^{\mu} \leq N_{RB}^{max,u}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k, l'). Here, k=0, ..., $N_{RS}^{\mu}N_{SC}^{RB}$-1 is an index in a frequency domain and l'=0, ..., $2^{\mu}N_{symb}^{(\mu)}$-1 refers to a position of a symbol in a subframe. When referring to a resource element in a slot, an index pair (k, 1) is used. Here, l=0, ..., $2^{\mu}N_{symb}^{(\mu)}$-1. A resource element (k, l') for $\mu$ and an antenna port p corresponds to a complex value, $a_{k,f}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.
- absoluteFrequencyPointA represents a frequency-position of point A expressed as in an absolute radio-frequency channel number (ARFCN).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k, 1) for a subcarrier spacing configuration $\mu$ in a frequency domain is given as in the following Equation 1.

[Equation 1]

$$n_{CRB}^{\mu}=k/N_{sc}^{RB}$$

In Equation 1, k is defined relatively to point A so that k=0 corresponds to a subcarrier centering around point A. Physical resource blocks are numbered from 0 to $N_{BWP,i}^{size}$-1 in a bandwidth part (BWP) and i is the number of a BWP. A relationship between a physical resource block $n_{PRB}$ and a common resource block $n_{CRB}$ in BWP i is given by the following Equation 2.

[Equation 2]

$$n_{CRB}^{\mu}=n_{PRB}^{\mu}+N_{BWP,i}^{start,\mu}$$

$N_{BWP,i}^{start,\mu}$ is a common resource block that a BWP starts relatively to common resource block 0.

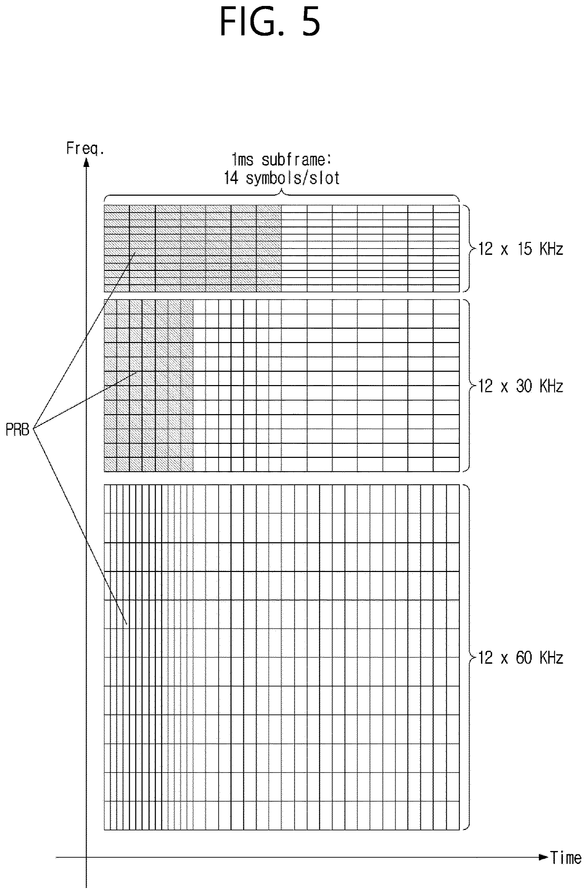

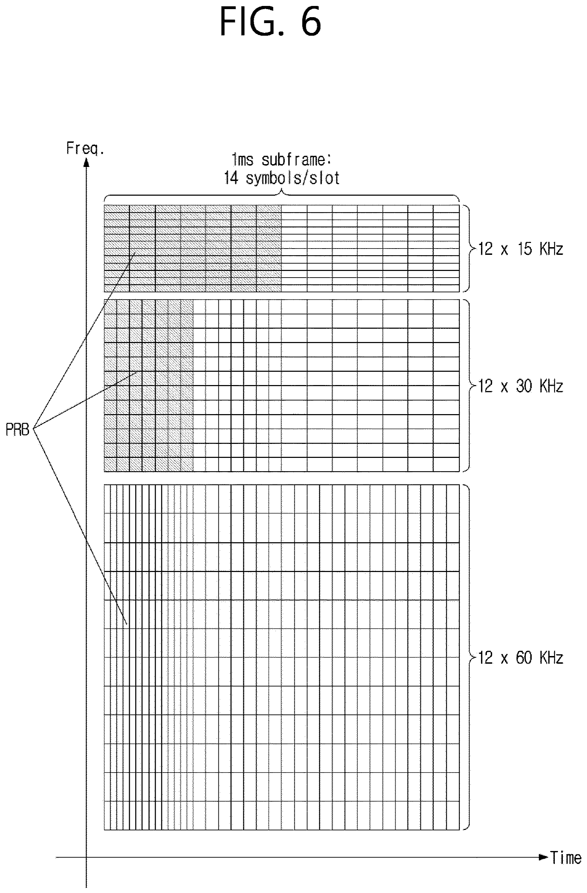

FIG. 5 exemplifies a physical resource block in a wireless communication system to which the present disclosure may be applied. In addition, FIG. 6 exemplifies a slot structure in a wireless communication system to which the present disclosure may be applied.

Referring to FIG. 5 and FIG. 6, a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.). A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

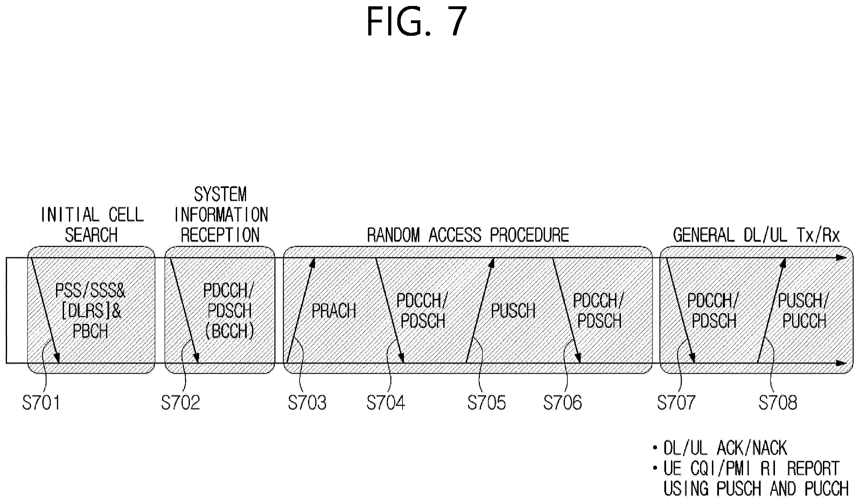

FIG. 7 exemplifies physical channels used in a wireless communication system, to which the present disclosure may be applied, and a general signal transmission and reception method using the physical channels.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

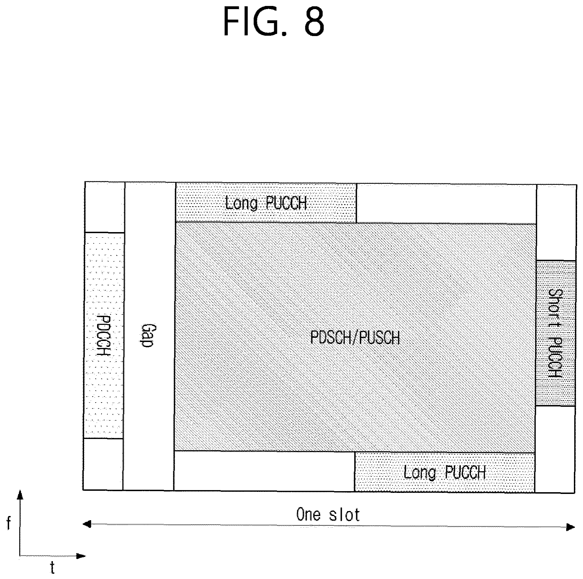

FIG. 8 is a diagram illustrating an example in which a physical channel is mapped in a slot to which various embodiments are applicable.

Referring to FIG. 8, a DL control channel, DL or UL data, UL control channel, etc. may all be included in one slot. For example, the first N symbols in a slot may be used to transmit a DL control channel (hereinafter, DL control region), and the last M symbols in a slot may be used to transmit a UL control channel (hereinafter, UL control region). N and M are each an integer greater than or equal to 0. A resource region (hereinafter, referred to as a data region) between the DL control region and the UL control region may be used for DL data transmission or for UL data transmission. A time gap for DL-to-UL or UL-to-DL switching may exist between the control region and the data region. The PDCCH may be transmitted in the DL control region, and the PDSCH may be transmitted in the DL data region. Some symbols at the time of switching from DL to UL in a slot may be used as a time gap.

DL Physical Channel/Signal

(1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

(2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time-/frequency resource allocation information on a higher layer control message such as a random access response (RAR) transmitted over a PDSCH; transmit power control commands; and information on activation/deactivation of SPS/CS. Various DCI formats may be provided depending on information in DCI.
Table 5 shows DCI formats transmitted over the PDCCH.

[Table 5]

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 1_0 | Scheduling of PDSCH in one cell |
| 1_1 | Scheduling of PDSCH in one cell, and/or triggering one shot HARQ-ACK codebook feedback |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2 2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a CBG-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or UL scheduling information. DCI format 2_0 may be used to provide dynamic slot format information (e.g., dynamic SFI) to the UE, and DCI format 2_1 may be used to provide downlink pre-emption information to the UE. UEs defined as one group may be provided with DCI format 2_0 and/or DCI format 2_1 over a group common PDCCH, which is a PDCCH defined for a group of UEs.
The PDCCH/DCI may include a cyclic redundancy check (CRC), and the CRC may be masked/scrambled with various identifiers (e.g., radio network temporary identifier (RNTI)) according to the owner or purpose of the PDCCH. For example, if the PDCCH is for a specific UE, the CRC may be masked with a cell-RNTI (C-RNTI). If the PDCCH relates to paging, the CRC may be masked with a paging-RNTI (P-RNTI). If the PDCCH relates to system information (e.g., system information block (SIB)), the CRC may be masked with a system information RNTI (SI-RNTI). If the PDCCH relates to a random access response, the CRC may be masked with a random access-RNTI (RA-RNTI).
Table 6 shows the usage of the PDCCH and transport channels according to the type of RNTI. Here, the transport channel means a transport channel related to data carried by a PDSCH/PUSCH scheduled by the PDCCH.

[Table 6]

| RNTI | Usage | Transport Channel |
|---|---|---|
| P-RNTI | Paging and System Information change notification | PCH (Paging Channel) |
| SI-RNTI | Broadcast of System Information | DL-SCH |
| RA-RNTI | Random Access Response | DL-SCH |
| SI-RNTI | Broadcast of System Information | DL-SCH |
| RA-RNTI | Random Access Response | DL-SCH |
| Temporary C-RNTI | Contention Resolution (when no valid C-RNTI is available) | DL-SCH |
| Temporary C-RNTI | Msg3 transmission | UL-SCH |
| C-RNTI, MCS (Modulation and Coding Scheme)-C-RNTI | Dynamically scheduled unicast transmission | UL-SCH |
| C-RNTI | Dynamically scheduled unicast transmission | DL-SCH |
| MCS-C-RNTI | Dynamically scheduled unicast transmission | DL-SCH |
| C-RNTI | Triggering of PDCCH ordered random access | N/A |
| CS (Configured Scheduling)-RNTI | Configured scheduled unicast transmission (activation, reactivation and retransmission) | DL-SCH, UL-SCH |
| CS-RNTI | Configured scheduled unicast transmission(deactivation) | N/A |
| TPC (Transmit Power Control)-PUCCH-RNTI | PUCCH power control | N/A |
| TPC-PUSCH-RNTI | PUSCH power control | N/A |
| TPC-SRS-RNTI | SRS trigger and power control | N/A |
| INT(Interruption)-RNTI | Indication pre-emption in DL | N/A |
| SFI (Slot Format Indication)-RNTI | Slot Format Indication on the given cell | N/A |
| SP (Semi-persistent)-CSI (Channel State Information)-RNTI | Activation of Semi-persistent CSI reporting on PUSCH | N/A |

For the PDCCH, a fixed modulation scheme may be used (e.g., quadrature phase shift keying (QPSK)). One PDCCH may include 1, 2, 4, 8, or 16 control channel elements (CCEs) depending on the aggregation level (AL). One CCE may include 6 resource element groups (REGs), and one REG may be defined by one OFDMA symbol and one (P)RB.

The PDCCH may be transmitted in a control resource set (CORESET). The CORESET corresponds to a set of physical resources/parameters used to carry the PDCCH/DCI within a BWP. For example, the CORESET may include a set of REGs with a given numerology (e.g., SCS, CP length, etc.). The CORESET may be configured by system information (e.g., MIB) or UE-specific higher layer (e.g., RRC) signaling. For example, the following parameters/information may be used to configure the CORESET. One UE may be configured with one or more CORESETs, and a plurality of CORESETs may overlap in the time/frequency domain.

- controlResourceSetId: this parameter/information indicates the identifier (ID) of the CORESET.
- frequencyDomainResources: this parameter/information indicates frequency-domain resources of the CORESET. The frequency-domain resources may be indicated by a bitmap, and each bit corresponds to an RB group (=6 consecutive RBs). For example, the most significant bit (MSB) of the bitmap corresponds to the first RB group in the BWP. An RB group corresponding to a bit with a value of 1 may be allocated as a frequency-domain resource of the CORESET.
- duration: this parameter/information indicates time-domain resources of the CORESET. The parameter/information duration may indicate the number of consecutive OFDMA symbols included in the CORESET. For example, duration has a value of 1-3.
- cce-REG-MappingType: this parameter/information indicates a CCE-to-REG mapping type. An interleaved type and a non-interleaved type may be supported.

- precoderGranularity: this parameter/information indicates a precoder granularity in the frequency domain.
- tci-StatesPDCCH: this parameter/information indicates information (e.g., TCI-StateID) on a transmission configuration indication (TCI) state for the PDCCH. The TCI state may be used to provide a quasi-co-location (QCL) relationship between DL RS(s) in an RS set (TCI-state) and a PDCCH DMRS port.
- tci-PresentInDCI: this parameter/information indicates whether a TCI field is included in DCI.
- pdcch-DMRS-ScramblingID: this parameter/information indicates information used for initialization of a PDCCH DMRS scrambling sequence.

For PDCCH reception, the UE may monitor (e.g., blind decoding) a set of PDCCH candidates in the CORESET. The PDCCH candidate may mean CCE(s) monitored by the UE for PDCCH reception/detection. PDCCH monitoring may be performed in one or more CORESETs in an active DL BWP on each active cell in which the PDCCH monitoring is configured. The set of PDCCH candidates monitored by the UE may be defined as a PDCCH search space (SS) set. The SS set may be classified into a common search space (CSS) set or a UE-specific search space (USS) set.

Table 7 shows PDCCH search spaces.

[Table 7]

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |
| Type1-PDCCH | Common | RA-RNTI or TC-RNTI on a primary cell | Msg2, Msg4 in RACH |
| Type2-PDCCH | Common | P-RNTI on a primary cell | PagingSystem Information change notification |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g., PDSCH/PUSCH) |

The SS set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets.

- searchSpaceId: this parameter/information indicates the ID of the SS set.
- controlResourceSetId: this parameter/information indicates the CORESET associated with the SS set.
- monitoringSlotPeriodicityAndOffset: this parameter/information indicates a PDCCH monitoring periodicity (in a unit of slot) and a PDCCH monitoring offset (in a unit of slot)
- monitoringSymbolsWithinSlot: this parameter/information indicates first OFDMA symbol(s) for PDCCH monitoring in a slot in which the PDCCH monitoring is configured. The first OFDMA symbol(s) are indicated by a bitmap, and each bit corresponds to each OFDMA symbol in the slot. The MSB of the bitmap corresponds to the first OFDM symbol in the slot. OFDMA symbol(s) corresponding to bit(s) with a value of l corresponds to the first symbol(s) in the CORESET in the slot.
- nrofCandidates: this parameter/information indicates the number of PDCCH candidates (e.g., one of 0, 1, 2, 3, 4, 5, 6, and 8) for each AL (where AL={1, 2, 4, 8, 16}).
- searchSpaceType: this parameter/information indicates whether the SS type is the CSS or USS.
- DCI format: this parameter/information indicates the DCI format of a PDCCH candidate.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

UL Physical Channels/Signals

(1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

(2) PUCCH

A PUCCH may carry UCI. The UCI includes the following information.

Scheduling request (SR): The SR is information used to request a UL-SCH resource.

Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.

Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

Table 8 shows PUCCH formats. The PUCCH formats may be classified according to UCI payload sizes/transmission lengths (e.g., the number of symbols included in a PUCCH resource) and/or transmission structures. The PUCCH formats may be classified into short PUCCH formats (PUCCH formats 0 and 2) and long PUCCH formats (PUCCH formats 1, 3, and 4) according to the transmission lengths.

[Table 8]

| PUCCH format | Length in OFDM symbols $N_{symb}^{PUCCH}$ | Number of bits | Usage | Etc |
|---|---|---|---|---|
| 0 | 1 - 2 | $\leq 2$ | HARQ, SR | Sequence selection |
| 1 | 4-14 | $\leq 2$ | HARQ, [SR] | Sequence modulation |
| 2 | 1 - 2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

(0) PUCCH Format 0 (PF0)

- Supportable UCI payload size: up to K bits (e.g., K=2)
- Number of OFDM symbols included in one PUCCH: 1 to X symbols (e.g., X=2)
- Transmission structure: only a UCI signal is configured with no DM-RS, and a UCI state is transmitted by selecting and transmitting one of a plurality of sequences.

(1) PUCCH Format 1 (PF1)

- Supportable UCI payload size: up to K bits (e.g., K=2)

- Number of OFDM symbols included in one PUCCH: Y to Z symbols (e.g., Y=4 and Z=14)
- Transmission structure: UCI and a DM-RS are configured in different OFDM symbols based on time division multiplexing (TDM). For the UCI, a specific sequence is multiplied by a modulation symbol (e.g., QPSK symbol). A cyclic shift/orthogonal cover code (CS/OCC) is applied to both the UCI and DM-RS to support code division multiplexing (CDM) between multiple PUCCH resources (complying with PUCCH format 1) (in the same RB).

(2) PUCCH Format 2 (PF2)

- Supportable UCI payload size: more than K bits (e.g., K=2)
- Number of OFDM symbols included in one PUCCH: 1 to X symbols (e.g., X=2)
- Transmission structure: UCI and a DMRS (DM-RS) are configured/mapped in/to the same symbol based on frequency division multiplexing (FDM), and encoded UCI bits are transmitted by applying only an inverse fast Fourier transform (IFFT) thereto with no DFT.

(3) PUCCH Format 3 (PF3)

- Supportable UCI payload size: more than K bits (e.g., K=2)
- Number of OFDM symbols included in one PUCCH: Y to Z symbols (e.g., Y=4 and Z=14)
- Transmission structure: UCI and a DMRS are configured/mapped in/to different symbols based on TDM. Encoded UCI bits are transmitted by applying a DFT thereto. To support multiplexing between multiple UEs, an OCC is applied to the UCI, and a CS (or interleaved frequency division multiplexing (IFDM) mapping) is applied to the DM-RS before the DFT.

(4) PUCCH Format 4 (PF4 or F4)

- Supportable UCI payload size: more than K bits (e.g., K=2)
- Number of OFDM symbols included in one PUCCH: Y to Z symbols (e.g., Y=4 and Z=14)
- Transmission structure: UCI and a DMRS are configured/mapped in/to different symbols based on TDM. The DFT is applied to encoded UCI bits with no multiplexing between UEs.

Beam Management (BM)

The BM procedure is an L1 (layer 1) / L2 (layer 2) procedure for obtaining and maintaining a set of base station (e.g., gNB, TRP, etc.) and/or terminal (e.g., UE) beams that may be used for downlink (DL) and uplink (UL) transmission/reception, and may include the following procedures and terms.

- Beam measurement: The operation in which a base station or a UE measures characteristics of a received beam forming signal.
- Beam determination: The operation in which a base station or a UE selects its transmit beam (Tx beam) / receive beam (Rx beam).
- Beam sweeping: The operation in which a transmit and/or receive beam is used to cover a spatial domain for a certain time interval in a predetermined manner.
- Beam report: The operation in which a UE reports information of a beamformed signal based on beam measurement.

The BM procedure may be classified into (1) a DL BM procedure using a synchronization signal (SS) / physical broadcast channel (PBCH) block or a CSI-RS, and (2) a UL BM procedure using a sounding reference signal (SRS).
In addition, each BM procedure may include Tx beam sweeping for determining a Tx beam and Rx beam sweeping for determining an Rx beam.

<DL BM>

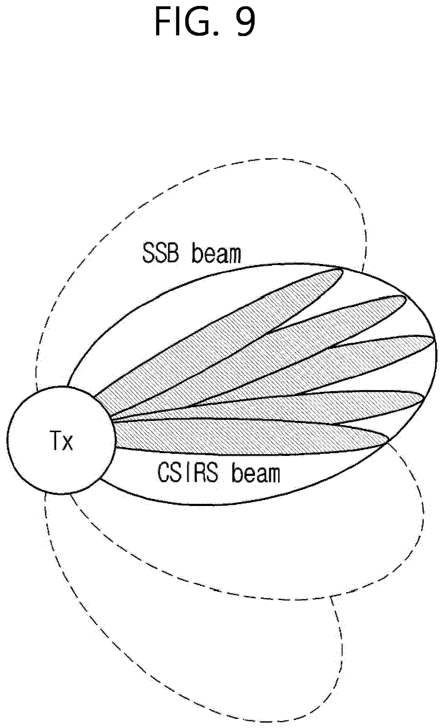

The DL BM procedure may include (1) transmission of beamformed DL reference signals (RSs) (e.g., CSI-RS or SS block (SSB)) of a base station, and (2) beam reporting of a UE.
Here, the beam reporting may include a preferred DL RS identifier (ID)(s) and a corresponding L1-reference signal received power (L1-RSRP).
The DL RS ID may be an SSB resource indicator (SSBRI) or a CSI-RS resource indicator (CRI).
As shown in FIG. 9, an SSB beam and a CSI-RS beam may be used for beam measurement. The measurement metric is L1-RSRP per resource/block. The SSB may be used for coarse beam measurement, and a CSI-RS may be used for fine beam measurement. The SSB may be used for both Tx beam sweeping and Rx beam sweeping.

The Rx beam sweeping using an SSB may be performed across a plurality of SSB bursts while the UE changes an Rx beam for the same SSBRI. Here, one SS burst includes one or more SSBs, and one SS burst set includes one or more SS bursts.

<DL BM using SSB>

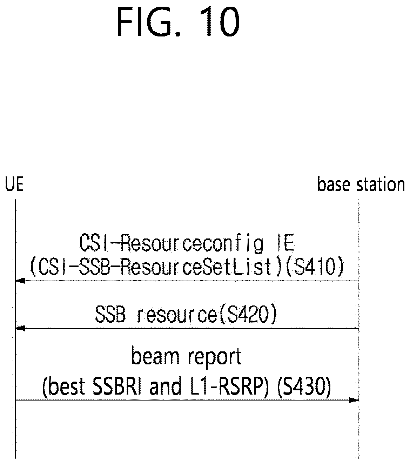

FIG. 10 is a flowchart illustrating an example of the DL BM procedure using SSB.

Configuration of a beam report using an SSB is performed upon

- The UE receives, from the base station, CSI-ResourceConfig IE including CSI-SSB-ResourceSetList which includes SSB resources used for BM (S410).

Table 9 shows an example of CSI-ResourceConfig IE, and like CSI-ResourceConfig IE in Table 9, BM configuration using an SSB is not defined additionally, and the SSB is set as a CSI-RS resource.

[Table 9]

```
-- ASN1START

-- TAG-CSI-RESOURCECONFIG-START

CSI-ResourceConfig ::=                          SEQUENCE {

csi-ResourceConfigId              CSI-ResourceConfigId,

      csi-RS-ResourceSetList              CHOICE {

          nzp-CSI-RS-SSB                          SEQUENCE {

              nzp-CSI-RS-ResourceSetList              SEQUENCE (SIZE (1..maxNrofNZP-CSI-RS-
ResourceSetsPerConfig)) OF NZP-CSI-RS-ResourceSetId OPTIONAL,

              csi-SSB-ResourceSetList                  SEQUENCE (SIZE (1..maxNrofCSI-SSB-Reso
urceSetsPerConfig)) OF CSI-SSB-ResourceSetId      OPTIONAL

          },

          csi-IM-ResourceSetList                  SEQUENCE (SIZE (1..maxNrofCSI-IM-ResourceSe
tsPerConfig)) OF CSI-IM-ResourceSetId

      },


      bwp-Id                          BWP-Id,

      resourceType                    ENUMERATED { aperiodic, semiPersistent, periodic },

      ...
```

```
        }


        -- TAG-CSI-RESOURCECONFIGTOADDMOD-STOP

        -- ASN1STOP
```

In Table 9, the parameter csi-SSB-ResourceSetList indicates a list of SSB resources used for beam management and reports in a single resource set. Herein, the SSB resource set may be configured as {SSBx1, SSBx2, SSBx3, SSBx4, ...}. An SSB index may be defined from 0 to 63.

- The UE receives the SSB resources from the base station based on the CSI-SSB-ResourceSetList (S420).
- When CSI-RS reportConfig for SSBRI and L1-RSRP reporting is configured, the UE (beam) reports the best SSBRI and L1-RSRP corresponding thereto to the base station (S430).

That is, when reportQuantity in the CSI-RS reportConfig IE is configured as ssb-Index-RSRP, the UE reports the best SSBRI and L1-RSRP corresponding thereto to the base station.

Then, when a CSI-RS resource is configured in an OFDM symbol(s) identical to an SSB (SS/PBCH Block) and QCL-TypeD is applicable, the UE may assume that the CSI-RS and the SSB are quasi co-located with each other in terms of "QCL-TypeD".

Herein, the QCL Type D may mean that antenna ports are QCL with each other in terms of the spatial Rx parameter. When the UE receives a plurality of DL antenna ports which are in a QCL Type D relationship with each other, it is possible to apply the same Rx beam. In addition, the UE does not expect that a CSI-RS is configured in an RE overlapping with a RE of the SSB.

<DL BM using CSI-RS>

Regarding the use of a CSI-RS, i) when a repetition parameter is configured for a specific CSI-RS resource set and TRS_info is not configured, the CSI-RS is used for beam management. ii) when the repetition parameter is not configured and TRS_info is configured, the CSI-RS is used for a tracking reference signal (TRS). iii) when the repetition parameter is not configured and TRS_info is not configured, the CSI-RS is used for CSI acquisition.

This repetition parameter may be set only for CSI-RS resource sets that are associated with CSI-ReportConfig having a report of L1 RSRP or 'No Report or None'.

If the UE receives CSI-ReportConfig in which reportQuantity is set to 'cri-RSRP' or 'none' and, CSI-Resource-Config for channel measurement (higher layer parameter 'resourcesForChannelMeasurement') does not include higher layer parameter 'trs-Info' but includes NZP-CSI-RS-ResourceSet which is set to higher layer parameter 'repetition' (repetition=ON), the UE may be composed of a port of the same number (1-port or 2-port), which includes higher layer parameter 'nrofPorts' for all CSI-RS resources in the NZP-CSI-RS-ResourceSet.

When (higher layer parameter) repetition is set to "ON," it is related to an Rx beam sweeping procedure of a UE. In this case, when the UE is configured with an NZP-CSI-RS-ResourceSet, the UE may assume that at least one CSI-RS resource in the NZP-CSI-RS-ResourceSet is transmitted through the same downlink spatial domain transmission filter. That is, at least one CSI-RS resource in the NZP-CSI-RS-ResourceSet is transmitted through the same Tx beam. Here, at least one CSI-RS resource in the NZP-CSI-RS-ResourceSet may be transmitted in different OFDM symbols. In addition, the UE is not expected to receive different periodicities in periodicityAndOffset among all CSI-RS resources in the NZP-CSI-RS-ResourceSet.

In contrast, when repetition is set to "OFF," it is related to a Tx beam sweeping procedure of a base station. In this case, when repetition is set to "OFF," the UE does not assume that at least one CSI-RS resource in the NZP-CSI-RS-ResourceSet is transmitted through the same downlink spatial domain transmission filter. That is, at least one CSI-RS resource in the NZP-CSI-RS-ResourceSet is transmitted through different Tx beams.

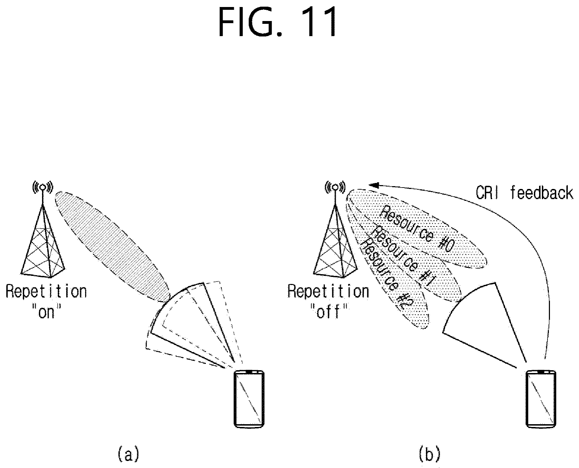

FIG. 11 is a diagram illustrating an example of a DL BM procedure using a CSI-RS. FIG. 11(a) shows an Rx beam determination (or refinement) procedure of a UE, and FIG. 11(b) shows a Tx beam determination procedure of a base station. In addition, FIG. 11(a) shows the case where the parameter repetition is set to "ON", and FIG. 11(b) shows the case where the parameter "repetition" is set as "OFF".

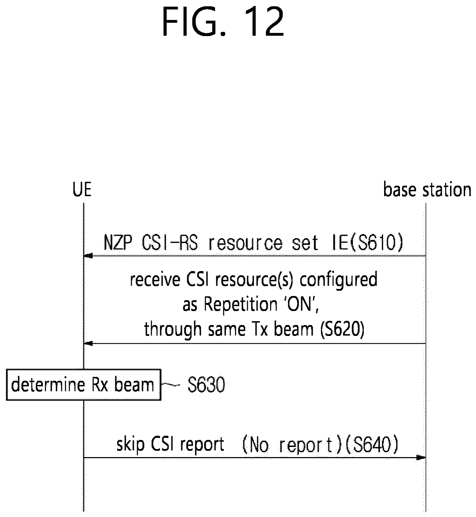

With reference to FIG. 11(a) and FIG. 12, the Rx beam determination procedure of the UE will be described.

FIG. 12 is a flowchart illustrating an example of the Rx beam determination procedure of the UE.

- The UE receives, from the base station, NZP CSI-RS resource set IE including higher layer parameter repetition through RRC signaling (S610). The parameter repetition is set to "ON".
- The UE repeatedly receives a resource(s) in a CSI-RS resource set, in which repetition is set to "ON", from a different OFDM symbol through the same Tx beam (or a DL spatial domain transmission filter) (S620).
- In doing so, the UE determines its own Rx beam (S630).
- The UE may omit a CSI report or may transmit a CSI report including CRI/L1-RSRP to the base station (S640).

That is, when the repetition is set to "ON", the UE may omit a CSI report or may report ID information (CRI) of a beam pair-related preferred beam and a quality value thereof (L1-RSRP).

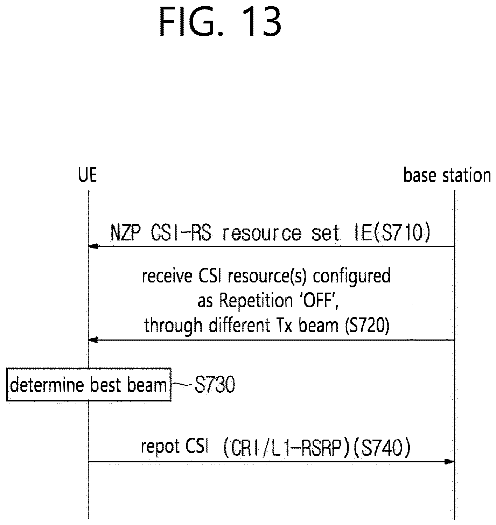

With reference to FIG. 11(b) and FIG. 13, the Tx beam determination procedure of the base station will be described.

FIG. 13 is a flowchart illustrating an example of the Tx beam determination procedure of the base station.

- the UE receives, from the base station, NZP CSI-RS resource set IE including higher layer parameter repetition through RRC signaling (S710). Here, the repetition parameter is set to "OFF" and relates to a Tx beam sweeping procedure of the base station.
- the UE receives resources in a CSI-RS resource set, in which repetition is set to "OFF", via a different Tx beam (a DL spatial domain transmission filter) (S720).
- the UE selects (or determines) the best beam (S730), and
- the UE reports ID and quality information (e.g., L1-RSRP) of the selected beam to the base station (S740). In this case, reportQuantity of CSI report Config may be configured as "CRI+L1-RSRP".

That is, when the CSI-RS is transmitted for BM, the UE reports CSI and L1-RSRP corresponding thereto to the base station.

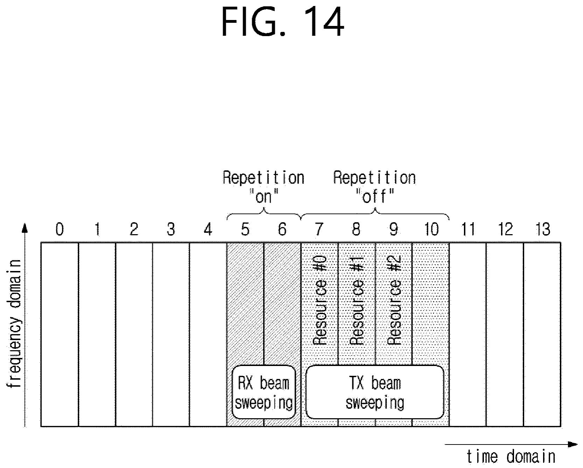

FIG. 14 is a diagram illustrating an example of resource allocation in time and frequency domains, which is related to operation of FIG. 11.

That is, when repetition is set to "ON" for a CSI-RS resource set, a plurality of CSI-RS resources is repeatedly used via the same Tx beam, and, when repetition is set to "OFF" for the CSI-RS resource set, different CSI-RS resources are transmitted via different Tx beams.

<DL BM-Related Beam Indication>

A UE may receive RRC configuration of a list of a maximum M number of candidate Transmission Configuration Indication (TCI) states at least for the purpose of Quasi Co-location (CQL) indication. Herein, M may be 64.

Each TCI state may be configured as one RS set. ID of each DL RS for a spatial QCL at least in an RS set (QCL Type D) may refer to at least one of DL RS types such as an SSB, a P-CSI RS, a SP-CSI RS, or a A-CSI RS.

Initialization/update of ID of DL RS(s) in an RS set used at least for a spatial QCL purpose may be performed at least via explicit signaling.

Table 10 shows an example of TCI-State IE.

The TCI-State IE is associated with a quasi co-location (QCL) type corresponding to one or two DL reference signals (RSs).

[Table 10]

```
-- ASN1START

-- TAG-TCI-STATE-START
```

```
TCI-State ::=                       SEQUENCE {

    tci-StateId                         TCI-StateId,

    qcl-Type1                           QCL-Info,

    qcl-Type2                           QCL-Info
                            OPTIONAL,    -- Need R

    ...

}


QCL-Info ::=                        SEQUENCE {

    cell                                ServCellIndex
                            OPTIONAL,    -- Need R

    bwp-Id                              BWP-Id
                            OPTIONAL, -- Cond CSI-RS-Indicated

    referenceSignal                     CHOICE {

        csi-rs                              NZP-CSI-RS-ResourceId,

        ssb                                 SSB-Index

    },

    qcl-Type                            ENUMERATED {typeA, typeB, typeC, typeD},

    ...

}



-- TAG-TCI-STATE-STOP

-- ASN1STOP
```

In Table 10, the parameter "bwp-id" indicates a BL BWP where a RS is located, and the parameter "cell" indicates a carrier where an RS is located, and the parameter "reference signal" indicates a reference antenna port(s) which is a quasi colocation source for a corresponding target antenna port(s). The target antenna port(s) may be an example of a CSI-RS, a PDCCH DMRS, or a PDSCH DMRS. For example, in order to indicate QCL reference information for a NZP CSI-RS, TCI state ID may be indicated in each CORESET configuration. In another example, in order to indicate QCL reference information for a PDSCH DMRS antenna port(s), DCI state ID may be indicated via DCI.

<QCL (Quasi-Co Location)>

An antenna port is defined such that a channel over which a symbol on one antenna port is carried can be inferred from another channel over which a symbol on another antenna port is carried. When properties of the channel over which a symbol on one antenna port is carried can be inferred from a channel over which a symbol on another antenna port is carried, the two antenna ports may be in a quasi co-located or quasi co-location (QC/QCL) relationship.

Herein, the channel properties may include at least one of delay spread, Doppler spread, Doppler shift, average gain, and average delay. Herein, the spatial Rx parameter indicates a spatial (reception) channel property parameter such as an angle of arrival.

In order to decode a PDSCH according to a PDCCH which is detected and has DCI intended for a corresponding UE and a given serving cell, a list of M number of TCI-state configurations in higher layer parameter PDSCH-Config may be set. The number M depends on UE capability.

Each TCI-State includes a parameter for setting a quasi co-location relationship between one or two DL reference signals and a DMRS port of the PDSCH.

The quasi co-location relationship may be configured as higher layer parameter qcl-Type 1 for the first DL RS and qcl-Type 2 (when set) for the second DL RS. If there are the two DL RSs, a QCL type is not the same, regardless of whether the two DL RSs have the same reference or different references.

A quasi co-location type corresponding to each DL RS is given by higher layer parameter "qcl-Type" in QCL-Info, and may take one of the following forms.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, in the case where a target antenna port is a specific NZP CSI-RS, corresponding NZP CSI-RS antenna ports may be indicated/configured to be QCL with a specific TRS in terms of QCL-Type A or with a specific SSB in terms of QCL-Type D. The UE indicated/configured as above may receive a corresponding NZP CSI-RS using a measured Doppler and a delay value, and may apply a Rx beam, which is used in receiving the QCL-TypeD SSB, to receive the corresponding NZP CSI-RS.

The UE receives an activation command used to map eight TCI states to codepoints of a DCI field "Transmission Configuration Indication".

<UL BM>

In the UL BM, beam reciprocity (or beam correspondence) between a Tx beam and an Rx beam may or may not be established according to terminal implementation. If reciprocity between a Tx beam and an Rx beam is established in both a base station and a terminal, a UL beam pair may be aligned through a DL beam pair. However, when reciprocity between a Tx beam and an Rx beam is not established in either of a base station and a terminal, a UL beam pair determination process is required separately from a DL beam pair determination.

In addition, even when both the base station and the UE maintain beam correspondence, the base station may use a UL BM procedure for DL Tx beam determination without the UE requesting reporting of a preferred beam.

UL BM may be performed through beamformed UL SRS transmission, and whether UL BM of an SRS resource set is applied is configured by (higher layer parameter) usage. When usage is configured to 'BeamManagement (BM)', only one SRS resource may be transmitted in each of a plurality of SRS resource sets at a given time instant.

A terminal may be configured with one or more Sounding Reference Symbol (SRS) resource sets configured by the (higher layer parameter) SRS-ResourceSet (through higher layer signaling, RRC signaling, etc.). For each SRS resource set, a UE may be configured with K≥1 SRS resources (higher layer parameter SRS-resource). Here, K is a natural number, and a maximum value of K is indicated by SRS_capability.

Like DL BM, a UL BM procedure may also be divided into Tx beam sweeping of a terminal and Rx beam sweeping of a base station.

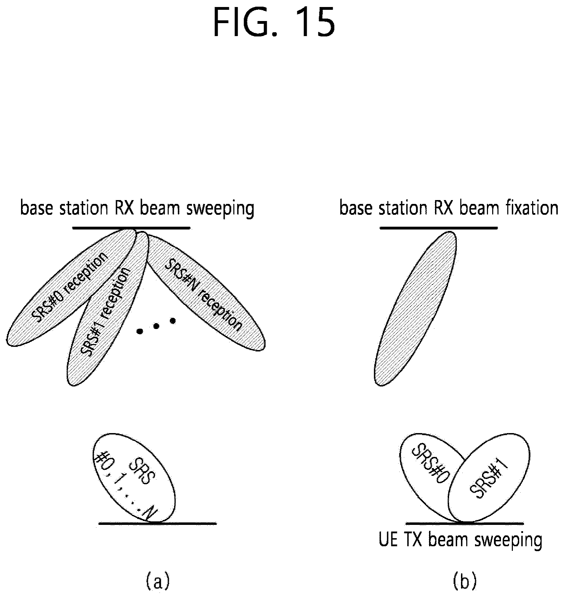

FIG. 15 is a diagram illustrating an example of the UL BM procedure using an SRS. FIG. 15(a) shows an RX beam determination procedure by a base station, and FIG. 15(b) shows a Tx beam determination procedure by a UE.

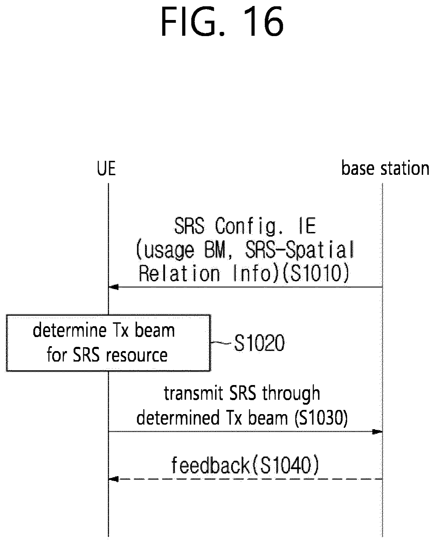

FIG. 16 is a flowchart illustrating a UL BM procedure using an SRS.

- A terminal receives RRC signaling (e.g., SRS-Config 1E) including a usage parameter (higher layer parameter) configured with 'beam management' from a base station (S1010).

Table 11 shows an example of an SRS-Config IE (Information Element), and the SRS-Config IE is used for SRS transmission configuration. The SRS-Config IE includes a list of SRS-Resources and a list of SRS-ResourceSets. Each SRS resource set means a set of SRS-resources.

A network may trigger transmission of an SRS resource set using configured aperiodicSRS-ResourceTrigger (L1

DCI).

[Table 11]

```
-- ASN1START

-- TAG-MAC-CELL-GROUP-CONFIG-START


SRS-Config ::=                          SEQUENCE {

        srs-ResourceSetToReleaseList            SEQUENCE (SIZE(1..maxNrofSRS-ResourceSets)) OF S
RS-ResourceSetId            OPTIONAL,    -- Need N

        srs-ResourceSetToAddModList             SEQUENCE (SIZE(1..maxNrofSRS-ResourceSets))
OF SRS-ResourceSet                      OPTIONAL,    -- Need N


        srs-ResourceToReleaseList               SEQUENCE (SIZE(1..maxNrofSRS-Resources)) OF
SRS-ResourceId              OPTIONAL,    -- Need N

        srs-ResourceToAddModList                SEQUENCE (SIZE(1..maxNrofSRS-Resources)) OF
SRS-Resource                OPTIONAL,    -- Need N


        tpc-Accumulation                        ENUMERATED {disabled}
                                        OPTIONAL,    -- Need S

        ...

}



SRS-ResourceSet ::=                 SEQUENCE {

        srs-ResourceSetId                       SRS-ResourceSetId,

        srs-ResourceIdList                      SEQUENCE (SIZE(1..maxNrofSRS-ResourcesPerS
et)) OF SRS-ResourceId      OPTIONAL,    -- Cond Setup
```

```
        resourceType                          CHOICE {

            aperiodic                             SEQUENCE {

                aperiodicSRS-ResourceTrigger        INTEGER (1..maxNrofSRS-TriggerStates-1),

                csi-RS                                    NZP-CSI-RS-ResourceId
                                    OPTIONAL,   -- Cond NonCodebook

                slotOffset                              INTEGER (1..32)
                                    OPTIONAL,   -- Need S

                ...

            },

            semi-persistent                       SEQUENCE {

                associatedCSI-RS                        NZP-CSI-RS-ResourceId
                                    OPTIONAL, -- Cond NonCodebook

                ...

            },

            periodic                              SEQUENCE {

                associatedCSI-RS                        NZP-CSI-RS-ResourceId
                                    OPTIONAL, -- Cond NonCodebook

                ...

            }

        },

        usage                                               ENUMERATED {beamManagement, codeboo
k, nonCodebook, antennaSwitching},

        alpha                                   Alpha
                                    OPTIONAL, -- Need S

        p0                                      INTEGER (-202..24)
                                    OPTIONAL, -- Cond Setup

        pathlossReferenceRS                     CHOICE {

            ssb-Index                           SSB-Index,

            csi-RS-Index                        NZP-CSI-RS-ResourceId
```

```
SRS-SpatialRelationInfo ::=          SEQUENCE {

            servingCellId                      ServCellIndex
            OPTIONAL,     -- Need S

            referenceSignal                    CHOICE {

                ssb-Index                          SSB-Index,

                csi-RS-Index                       NZP-CSI-RS-ResourceId,

                srs                                SEQUENCE {

                    resourceId                         SRS-ResourceId,

                    uplinkBWP                          BWP-Id

                }

            }

        }



SRS-ResourceId ::=                      INTEGER (0..maxNrofSRS-Resources-1)
```

In Table 11, usage represents a higher layer parameter indicating whether an SRS resource set is used for beam management, codebook-based or non-codebook-based transmission. The usage parameter corresponds to an L1 parameter 'SRS-SetUse'. 'spatialRelationInfo' is a parameter indicating a configuration of a spatial relation between a reference RS and a target SRS. Here, a reference RS may be an SSB, a CSI-RS, or an SRS corresponding to the L1 parameter 'SRS-SpatialRelationInfo'. The usage configured for each SRS resource set.

- the terminal determines a Tx beam for an SRS resource to be transmitted based on the SRS-SpatialRelation Info included in the SRS-Config IE (S1020). Here, SRS-SpatialRelation Info is configured for each SRS resource, and indicates whether to apply the same beam as a beam used in an SSB, a CSI-RS, or an SRS for each SRS resource. In addition, SRS-SpatialRelationInfo may or may not be configured in each SRS resource.
- If the SRS-SpatialRelationInfo is configured in an SRS resource, the same beam as a beam used in an SSB, a CSI-RS or an SRS is applied and transmitted. However, if the SRS-SpatialRelationInfo is not configured in an SRS resource, the terminal arbitrarily determines a Tx beam and transmits an SRS through the determined Tx beam (S1030).

More specifically, for P-SRS in which 'SRS-ResourceConfigType' is configured to 'periodic':

i) When SRS-SpatialRelationInfo is configured with 'SSB/PBCH', a UE transmits a corresponding SRS resource by applying the same spatial domain transmission filter (or generated from a corresponding filter) as a spatial domain reception (Rx) filter used for reception of an SSB/PBCH; or

ii) When SRS-SpatialRelationInfo is configured with 'CSI-RS', a UE transmits an SRS resource by applying the same spatial domain transmission filter used for reception of a periodic CSI-RS or an SP (semi-persistent) CSI-RS; or

iii) When SRS-SpatialRelationInfo is configured with 'SRS', a UE transmits a corresponding SRS resource by applying the same spatial domain transmission filter used for transmission of a periodic SRS.

Similar to the above, even when 'SRS-ResourceConfigType' is configured with 'SP (semi-persistent)-SRS' or 'AP (aperiodic)-SRS', beam determination and transmission operation may be applied.

- Additionally, a terminal may or may not receive feedback on an SRS from a base station as in the following three cases (S1040).

  i) When Spatial Relation Info is configured for all SRS resources in an SRS resource set, a terminal transmits an SRS in a beam indicated by a base station. For example, when Spatial Relation Info all indicate the same an SSB, a CRI, or an SRI, a terminal repeatedly transmits an SRS in the same beam. This case corresponds to FIG. G(a), for the purpose of a base station selecting an Rx beam.
  ii) Spatial Relation Info may not be configured for all SRS resources in an SRS resource set. In this case, a terminal may freely transmit while changing an SRS beam. That is, this case corresponds to FIG. G(b), for the purpose of a terminal sweeping a Tx beam.
  iii) Spatial Relation Info may be configured only for some SRS resources in an SRS resource set. In this case, for the configured SRS resource, an SRS is transmitted with the indicated beam, and for the SRS resource for which Spatial Relation Info is not configured, a terminal may arbitrarily apply a Tx beam and transmit it.

Network Energy Saving (NES)

Energy saving of a base station is being importantly considered in wireless communication systems, including 3GPP, because it may contribute to building an eco-friendly network by reducing carbon emissions and to reducing the operational expenditure (OPEX) of operators in the telecommunications industry. In particular, due to the introduction of 5G communication, higher transmission rates are required, and therefore, base stations need to be equipped with a greater number of antennas and provide services through wider bandwidths and frequency bands. As a result, according to recent studies, the energy cost of base stations has reached a level of about 20% of the total OPEX. Accordingly, the 5G system has adopted various technologies for reducing energy consumption under the name of network energy savings (NES), and the standardization of related technologies is expected to continue. Specifically, Rel-18, which has been recently conducted, discussed techniques such as the following.

[Table 12]

| |
|---|
| 1. Specify SSB-less SCell operation for inter-band CA for FR1 and co-located cells, if found feasible by RAN4 study, where a UE measures SSB transmitted on PCell or another SCell for an SCell's time/frequency synchronization (including downlink AGC), and L1/L3 measurements, including potential enhancement on SCell activation procedures if necessary [RAN4, RAN2]
2. Specify enhancement on cell DTX/DRX mechanism including the alignment of cell DTX/DRX and UE DRX in RRC_CONNECTED mode, and inter-node information exchange on cell DTX/DRX [RAN2, RAN1, RAN3]<br>  • Note: No change for SSB transmission due to cell DTX/DRX.<br>  • Note: The impact to IDLE/INACTIVE UEs due to the above enhancement should be avoided.
3. Specify the following techniques in spatial and power domains<br>  • Specify necessary enhancements on CSI and beam management related procedures including measurement and report, and signaling to enable efficient adaptation of spatial elements (e.g. antenna ports, active transceiver chains) [RAN1, RAN2]<br>  • Specify necessary enhancements on CSI related procedures including measurement and report, and signaling to enable efficient adaptation of power offset values between PDSCH and CSI-RS [RAN1, RAN2]<br>  • Note: Above objectives are only for UE specific channels/signals<br>  • Note: Legacy UE CSI/CSI-RS capabilities applies when considering total number of CSI reports and requirements
4. Specify mechanism(s) to prevent legacy UEs camping on cells adopting the Rel-18 NES techniques, if necessary [RAN2]
5. Specify CHO procedure enhancement(s) in case source/target cell is in NES mode [RAN2]
6. Specify inter-node beam activation and enhancements on restricting paging in a limited area [RAN3].
Specify the corresponding RRM/RF core requirements, if necessary, for the above features [RAN4] |

According to the application of the NES technology, a base station may perform operations such as controlling on/off in a time axis for a certain time duration, adjusting transmission/reception resources for UE-common or UE-specific signals/channels, changing an amount of frequency-domain resources, adjusting transmission power, or turning on/off antenna ports, transmission-reception points (TRPs), etc. in a spatial domain.

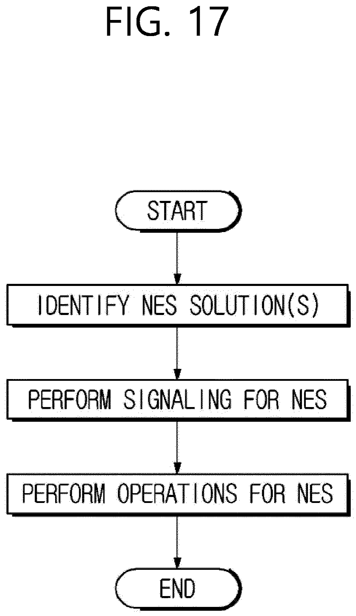

FIG. 17 illustrates an example of an operation procedure of a base station supporting an NES technology. Referring to FIG. 17, the base station identifies NES solution(s) to be applied. The NES solution(s) may be related to control of signal transmission/reception (e.g., on/off), beam operation, handover procedure, channel measurement and reporting, and the like. Which NES solution(s) to apply may be adaptively selected according to a current situation (e.g., cell load level, characteristics of connected UEs, etc.) or may be predefined. The base station having identified the NES solution(s) performs signaling for NES. The specific signaling procedure may vary depending on the identified NES solution(s). For example, the base station may transmit common information regarding the NES solution(s), may transmit configuration information necessary for NES operation to at least one UE. In addition, the base station may receive capability information related to NES from at least one UE. Thereafter, the base station performs operations for NES. In this case, the base station may perform the operations for NES based on the signaling performed earlier. That is, according to system information, configuration information, and control information transferred through the signaling, the base station may turn on/off transmission/reception of a specific signal, turn on/off elements of a spatial domain, or adjust resources for transmission/reception of a measurement signal.

Through a procedure such as that of FIG. 17, the NES technology may be performed. Examples of NES solutions that may be performed through a procedure such as that of FIG. 17 are as follows.

• Intra-system energy saving solution: the RAN node may request a neighboring RAN node to switch at least one SSB beam into its deactivated cell, or may perform paging to a UE in an inactive state (e.g., a stationary UE) using a limited beam set.

• Inter-system energy saving solution: the NG-RAN node having a capacity booster cell may autonomously switch the cell to an inactive state.

• SSB-less SCell solution: when an SSB or an SSB-based RRM measurement timing configuration (SMTC) configuration for an SCell is not provided, the UE may obtain a timing reference and an AGC source from another serving cell. In FR1 or FR2, the base station may configure intra-band CA or inter-band CA including an SCell without SSB transmission, and in this case, SSB/SIB transmission may be triggered by a wake up signal (WUS) of the UE. Accordingly, since the period of a common channel/signal such as an SSB is increased, the base station may remain in a sleep state for a longer time.

• Cell DTX/DRX solution: To reduce downlink transmission/uplink reception activity time of a base station, a periodic cell DTX/DRX pattern (e.g., active and inactive periods) may be commonly configured for UEs in a cell having such a feature. Here, the cell DTX pattern and the cell DRX pattern may be separately configured and activated, and up to two cell DTX/DRX patterns may be configured per MAC entity. When cell DTX is configured and activated, at least one of monitoring for SPS opportunities or monitoring a PDCCH may be suspended during a cell DTX inactive period. When cell DRX is configured and activated, at least one of transmission on a CG resource or SR transmission may be suspended during a cell DRX inactive period. The cell DTX/DRX may be activated/deactivated through RRC signaling or L1 group common signaling.

• For cell DTX/DRX, parameters such as an active duration and a cycle may be configured. The active duration is a period in which the UE waits to receive a PDCCH or an SPS opportunity and to transmit an SR or a CG, and the cycle specifies periodic repetition of the active duration and an inactive duration. When both cell DTX and cell DRX are configured, parameters such as the active duration and the cycle are common. If the base station recognizes an emergency call or a public safety-related service (e.g., MPS or MCS), the network may release or deactivate the cell DTX/DRX configuration so as not to affect the corresponding service. In addition, at least partial overlap is required between the active duration of connected mode DRX of the UE and the active duration of cell DTX/DRX. For example, the connected mode DRX cycle of the UE may be a multiple of the cell DTX/DRX cycle or vice versa.

• Conditional handover (CHO) solution: the CHO procedure, in which execution of handover is determined by the UE, is used while an NES technology is applied (e.g., when a cell activates or deactivates cell DTX/DRX). In this case, the UE may use an NES-specific CHO event to execute CHO to a candidate cell, and as an additional triggering condition for this, reception of DCI that activates CHO condition(s) set as an NES event indication may be applied.

• Spatial and power domain adaptation solution: to support a gNB in transceiver muting and/or transmission power adaptation, a UE may be configured to report multiple CSI entries in CSI reporting based on a plurality of sub-configurations. Each sub-configuration corresponds to a spatial domain adaptation pattern (e.g., a subset of available spatial elements) and/or a power offset between a data channel (e.g., PDSCH) and CSI-RS. With the application of the spatial and power domain adaptation solution, CSI configuration, measurement, and/or reporting operations may be affected.

CSI Measurement and Reporting

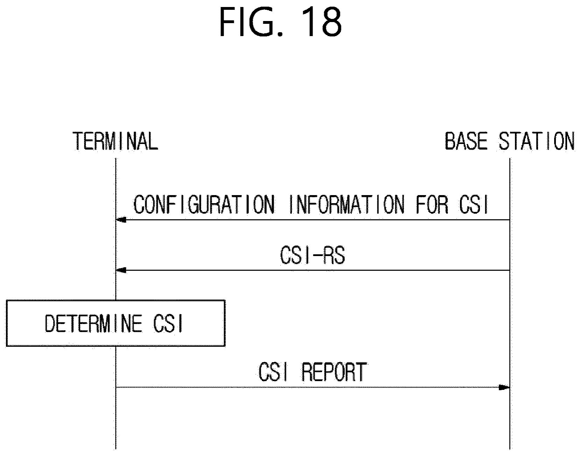

FIG. 18 illustrates an example of a procedure for CSI measurement and reporting.

Referring to FIG. 18, the base station transmits configuration information for CSI to the UE. The configuration information for CSI may include information related to a CSI-RS resource or resource set (e.g., time-frequency resource information, sequence information, power information, etc.), information related to CSI reporting (e.g., quantity information, report type information, report resource information, codebook information, etc.), and information related to CSI measurement. Here, to assist the base station in transceiver muting and/or transmission power adaptation, the UE may be configured to report multiple CSI entries in CSI reporting based on a plurality of sub-configurations. Here, each sub-configuration corresponds to a spatial domain adaptation pattern (e.g., a subset of available spatial elements) and/or a power offset. In addition, with respect to CSI reporting, a higher layer parameter (e.g., CSI-ReportConfig) included in the configuration information may include a list of sub-configurations, each sub-configuration being identified by an identifier (e.g., csi-ReportSubConfigID) and corresponding to a list of at least one CSI-RS resource, or to a CSI-RS antenna port subset, and/or, in addition to a power control offset parameter (e.g., powerControlOffset) for the CSI-RS resource(s), corresponding to a power offset for a PDSCH related to the CSI-RS.

In this case, the configuration related to CSI may include a plurality of sub-configurations. Accordingly, in interpreting the configuration information for CSI, the UE may determine a CSI-RS resource, CSI-RS port mapping, power offset, codebook type, reporting quantity, etc., by considering the sub-configurations. When the UE is configured with configuration information related to CSI reporting (e.g., CSI-ReportConfig) including sub-configurations, the UE is not expected that a higher layer parameter related to the reporting quantity (e.g., reportQuantity) is configured to 'cri-RSRP', 'cri-SINR', 'cri-SINR-Index', 'cri-RSRP-Index', 'none', 'ssb-Index-RSRP', 'ssb-Index-SINR', 'ssb-Index-RSRP-Index', 'ssb-Index-SINR-Index', or 'tdcp'. In addition, when the type of CSI reporting is configured as semi-persistent CSI reporting or aperiodic CSI reporting, the base station may activate/trigger only some of the sub-configurations configured for the UE through a MAC CE or DCI. That is, a trigger state for aperiodic CSI reporting may be configured as needed, and activation of semi-persistent CSI reporting may be controlled by an activation command.

For example, regarding the configuration for a reporting quantity, the UE may determine CSI-RS port index(es) for each CSI-RS resource based on information related to a port subset for each sub-configuration (hereinafter referred to as 'port subset indicator'). The port subset indicator may include a bitmap for specifying a portion of antenna ports for the corresponding CSI-RS resource. Accordingly, the UE may identify at least one antenna port for the corresponding sub-configuration based on positions of bits set to a positive value (e.g., 1) in the port subset indicator.

For example, regarding the configuration for a reporting quantity, the UE may determine a codebook type based on whether sub-configurations are present. Specifically, when sub-configurations are configured for CSI reporting, the UE may exclude the configuration of at least one codebook type. However, depending on the capability of the UE, it may be possible to configure the at least one codebook type.

For example, regarding the configuration for a reporting quantity, a power offset value and an NZP CSI-RS resource set may be configured for each sub-configuration. In this case, depending on whether a power offset value is configured for each sub-configuration and whether an NZP CSI-RS resource set is configured, interpretation of the NZP CSI-RS resource set for each sub-configuration may vary.

In determining a CQI, a higher layer parameter related to a time restriction for channel measurements (e.g., timeRestrictionForChannelMeasurements) may be configured. In this case, the UE should derive a channel estimation for determining CSI based on the most recent CSI reference resource. In this case, when cell DTX for the base station is activated, the cell DTX active time may be considered.

The CSI is derived based on a CSI reference resource. The CSI reference resource is defined, in the frequency domain, as a group of downlink physical resource blocks corresponding to a band related to the CSI derived in the frequency domain, and is defined, in the time domain, as one downlink slot determined based on a higher layer parameter and a subcarrier spacing. The UE should transmit CSI reporting no later than the CSI reference resource after receiving a CSI-RS. In this case, when sub-configurations are configured for CSI reporting, the CSI reference resource is considered for each sub-configuration.

When configured to report at least one of a CQI index, PMI, or RI, in the CSI reference resource, the UE may assume specific values for symbol positions and the number of symbols occupied by control signaling, the number of PDSCH and DMRS symbols, the subcarrier spacing of the BWP, the bandwidth for CQI reporting, the CP length and subcarrier spacing of the reference resource, the redundancy version (RV), etc., for the purpose of deriving at least one of the CQI index, PMI, or RI. In this case, when sub-configurations are configured for CSI reporting, assumptions regarding antenna ports, EPRE, etc., may be determined based on the sub-configurations.

Subsequently, the base station transmits at least one CSI-RS. Accordingly, the UE may receive the at least one CSI-RS and perform measurement. The at least one CSI-RS may be transmitted through a CSI-RS resource or resource set configured by the configuration information.

In this case, in a situation where the UE is configured to monitor power saving related control information (e.g. DCI format 2_6) and the DRX related timer (e.g. drx-onDurationTimer) is not started by a higher layer parameter (e.g. ps-TransmitOtherPeriodicCSI), when the UE is configured to report CSI using a reporting configuration type configured to periodic reporting and a reporting quantity configured to an item other than cri-RSRP and ssb-index-RSRP, the most recent CSI measurement opportunity occurs during a time indicated by the drx-onDurationTimer in DRX-related configuration information (e.g., DRX-Config), in addition to a DRX active time or a DRX active time for the CSI to be reported. As another example, in a situation where the UE is configured to monitor power saving-related control information (e.g., DCI format 2_6) and, according to a higher layer parameter (e.g., ps-TransmitPeriodicL1-RSRP), the drx-onDurationTimer has not been started, when the UE is configured to report L1-RSRP using a reporting configuration type configured to periodic reporting and a reporting quantity configured to cri-RSRP, the most recent CSI measurement opportunity occurs during a time indicated by the drx-onDurationTimer in DRX-related configuration information (e.g., DRX-Config), in addition to a DRX active time or a DRX active time for the CSI to be reported. In other cases, the most recent CSI measurement opportunity occurs within the DRX active time for the CSI to be reported.

Meanwhile, the base station may perform cell DTX/DRX operation. In this case, during a cell DTX inactive period, a UE configured with cell DTX is not expected to receive periodic CSI-RS and semi-persistent CSI-RS configured in a CSI reporting configuration associated with a reporting quantity including at least a rank indicator (RI). When cell DTX is activated for a serving cell, the most recent CSI measurement opportunity for a semi-persistent CSI-RS resource or a periodic CSI-RS resource occurs within cell DTX active periods for CSI reporting, which are configured by configuration information (e.g., CSI-ReportConfig) related to CSI reporting related to a reporting quantity including at least the RI.

The UE that has received at least one CSI-RS determines CSI. In other words, the UE performs CSI calculation. In this case, the UE may perform CSI calculation based on CSI processing criteria. The UE may indicate the number of supported simultaneous CSI calculations, that is, the number NCPU of CSI processing units (CPUs) that can be operated simultaneously. The UE may determine the number of CPUs for the corresponding CSI reporting based on at least one of the NCPU, the number of CPUs for each CSI reporting, the number of CPUs currently occupied, and the configuration of the reporting quantity. For example, for configuration information (e.g., CSI-ReportConfig) related to CSI reporting including a reporting quantity parameter (e.g., reportQuantity) not set to 'none', the CPU(s) may be occupied for at least one OFDM symbol, where the number of the at least one symbol may be determined based on CSI-RS resources or CSI-IM resources related to sub-configurations.

When configuration information (e.g., CSI-ReportConfig) related to CSI reporting includes a plurality of sub-configurations, the number of CPUs occupied by the CSI reporting is determined based on the number of CSI-RS resources corresponding to the sub-configuration. In this case, the number of CSI-RS resources may be determined based on the number of times referenced in the configuration information (e.g., CSI-ReportConfig) related to the CSI reporting, or based on the number of sub-configurations referring to the corresponding CSI-RS resource.

The UE that has determined CSI transmits CSI reporting to the base station. The UE may transmit CSI for at least one sub-configuration according to a reporting quantity parameter (e.g., reportQuantity) configured in configuration information (e.g., CSI-ReportConfig) related to CSI reporting. For example, the CSI reporting may include at least one of a PMI, CQI, RI, CRI, SSBRI, LI, or RSRP. In this case, the CSI reporting may include Part 1 CSI reporting and Part 2 CSI reporting. In addition, the CSI reporting may be transmitted through at least one of a PUCCH or a PUSCH.

When the UE multiplexes CSI reporting including Part 2 CSI reporting onto a PUCCH resource, the UE determines the PUCCH resource and the number of PRBs for the PUCCH resource, or the number of Part 2 CSI reports, on the assumption that each CSI report or each CSI sub-report included in the CSI reporting indicates rank 1 or a rank combination {1, 1}. When a higher layer parameter related to a CSI reporting mode (e.g., csi-ReportMode) is set to 'Mode2', the UE determines the PUCCH resource and the number of PRBs for the PUCCH resource, or the number of Part 2 CSI reports, on the assumption that each CRI of the CSI reporting is related to a resource pair.

When CSI reporting on a PUSCH includes two parts, the UE may omit a portion of Part 2 CSI. The omission of Part 2 CSI follows a priority order. Except when the corresponding CSI reporting includes at least one CSI sub-report including Part 2 corresponding to a sub-configuration from the list of sub-configurations provided by a higher layer parameter (e.g., csi-ReportSubConfigList) included in information (e.g., CSI-ReportConfig) related to the CSI reporting, when omitting Part 2 CSI information for a specific priority level, the UE should omit all information at that priority level.

For a reporting configuration related to information (e.g., CSI-ReportConfig) related to CSI reporting including a list of sub-configurations, the following processing may be possible. For a corresponding CSI reporting including at least one CSI sub-report, omission of Part 2 CSI is performed at a sub-configuration level within the same priority level. Here, a sub-configuration having a lower index value has a higher priority.

When a CSI reporting consists of two parts, the UE may omit a portion of Part 2 CSI. The omission of Part 2 CSI follows a priority order. For a reporting configuration related to information (e.g., CSI-ReportConfig) related to CSI reporting including a list of sub-configurations, for a given CSI reporting including at least one CSI sub-report, omission of Part 2 CSI is defined in section 5.2.3. Part 2 CSI is omitted starting from the lowest priority level up to a Part 2 CSI code rate less than or equal to a code rate configured by a higher layer parameter (e.g., maxCodeRate).

In addition, when a CQI request field in a DCI triggers CSI reporting(s) on a PUSCH, the first uplink symbol carrying the CSI reporting(s) shall not precede a symbol specified as a certain interval after the last symbol of the PDCCH carrying the corresponding DCI. This may be understood as ensuring CSI calculation time. In this case, when a plurality of sub-configurations are configured for CSI reporting, the start position of the certain interval described above may be determined based on all triggered sub-configurations.

Full duplex operation for NR

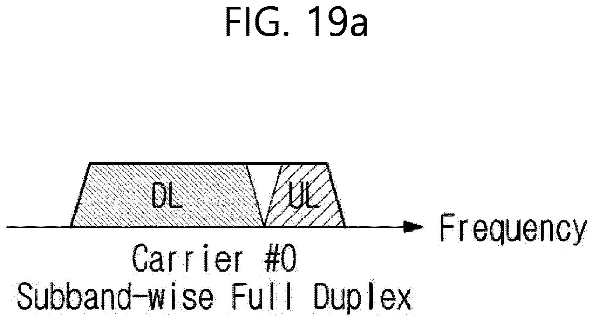

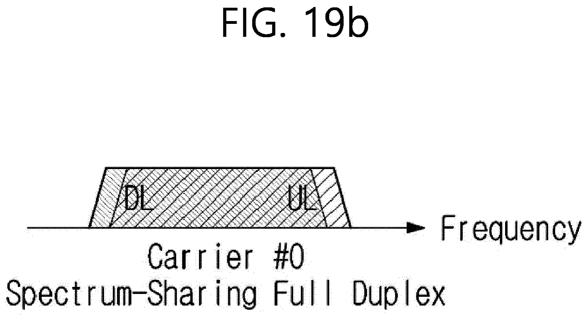

As an example of applying full duplex (FD) in intra-carrier operation, subband-wise FD (SB-FD) and spectrum-sharing FD (SS-FD) may be considered, as shown in FIG. 19a and FIG. 19b. In the case of SB-FD, DL and UL transmission/reception are performed on different frequency resources within the same carrier. That is, for the same time resource, DL and UL have different frequency resources. In the case of SS-FD, DL and UL transmission/reception are performed on the same frequency resource or overlapping frequency resources within the same carrier. That is, for the same time resource, DL and UL may have the same or overlapping frequency resources.

Such FD operation may be used in combination with conventional half-duplex operation. In conventional half-duplex-based TDD operation, only a part of the time resources may be used for FD operation. In the time resources performing FD operation, SB-FD or SS-FD operation may be performed.

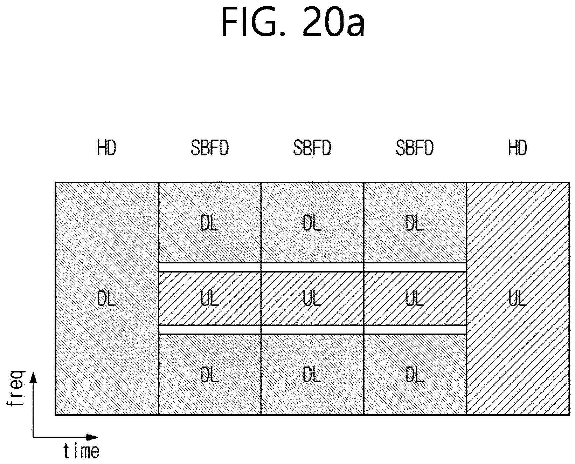

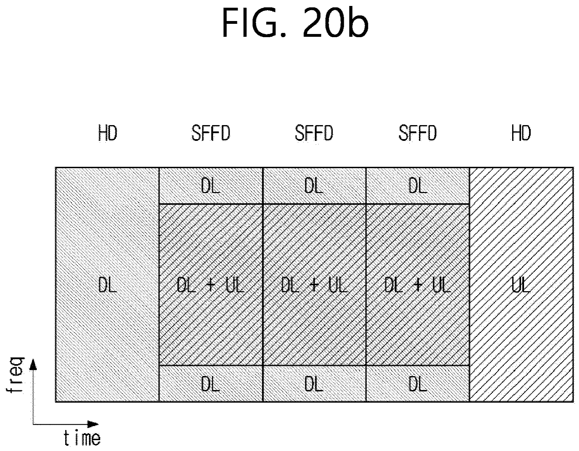

FIG. 20a and FIG. 20b show examples in which time resources operating in half duplex (HD) and time resources operating in FD, such as SB-FD or SS-FD, coexist. In FIG. 20a, some time resources operate in SB-FD and the remaining time resources operate in HD, while in FIG. 20b, some time resources operate in SS-FD and the remaining time resources operate in HD. In this case, a unit of the time resource may be, for example, a slot or a symbol.

In a time resource operating in SB-FD, some frequency resources are used as DL resources, and some frequency resources are used as UL resources. Between the DL and UL frequency resources, there may be a guard band (or guard frequency resource or guard subcarrier(s)) that is not used by either DL or UL and is empty. In a time resource operating in SS-FD, the entire frequency resource may be used for both DL and UL. Alternatively, to reduce the impact of interference from another adjacent carrier (e.g., adjacent carrier interference (ACI)), a portion of the frequency resources at one or both ends of the carrier may not be used for DL and/or UL. That is, one or both ends of the carrier may be used as a guard band not used for both DL and UL. Alternatively, to reduce ACI affecting UL reception, one or both ends of the carrier may be used only for DL transmission.

In the present disclosure, a slot resource operating in HD is referred to as an HD slot, and a slot resource operating in SB-FD and a slot resource operating in SS-FD are referred to as an SB-FD slot and an SS-FD slot, respectively. In addition, the SB-FD slot and the SS-FD slot are collectively referred to as an FD slot.

In the present disclosure, in a time resource operating in FD, frequency resources operating as DL among the entire frequency resources are referred to as DL sub-bands, and frequency resources operating as UL are referred to as UL sub-bands.

In the case of FD operation as described above, FD operation may be performed in relation to both the gNB perspective and the UE. That is, both the gNB and the UE may simultaneously perform DL and UL transmission/reception in the same time resource using the same or different frequency resources. In contrast, only the gNB may perform FD operation, and the UE may perform half-duplex operation. The gNB may simultaneously perform DL transmission and UL reception in the same time resource using the same or different frequency resources, while the UE performs only DL reception or only UL transmission in a specific time resource. In this case, the gNB performs FD operation by performing DL transmission and UL reception with different UEs at the same time.

The base station may perform FD operation while the UE performs half-duplex operation, or the base station may perform half-duplex operation while the UE performs FD operation. Alternatively, both the base station and the UE may support FD operation.

If a UE is aware that the base station can perform FD operation, it may be collectively referred to as an FD-aware UE. When the base station can perform subband non-overlapping FD (e.g., SBFD) operation and the UE is aware of this information, the UE may be collectively referred to as an SBFD-aware UE. When the base station can perform spectrum shared (or subband-overlapping) FD (e.g., SSFD) operation and the UE is aware of this information, the UE may be referred to as an SSFD-aware UE.

When the base station supports performing both half-duplex and FD operation, it may inform the UE of information on resources (time, frequency, or both time and frequency) that can perform, are expected to perform, or will perform half-duplex and FD.

When the base station can perform SSFD operation, in the case of an FD base station, this may mean enabling UL reception simultaneously on some or all frequency resources available for DL transmission of the base station. That is, on certain frequency resources, not only DL transmission/reception but also UL reception/transmission may be possible. In this case, for SSFD, information on frequency resources where SSFD is possible may be transferred. In addition, information on time resources where SSFD is possible may be transferred.

In the case of an FD UE, this may mean enabling UL transmission simultaneously on some or all frequency resources available for DL reception of the UE. In the present disclosure, a UE performing half-duplex operation is referred to as an HD UE, and a UE capable of performing or performing FD operation is referred to as an FD UE.

When the base station performs FD operation such as SBFD or SSFD, SSFD and/or SBFD operation may be performed only on some time/frequency resources. In the case of an SBFD-aware UE and/or an SSFD-aware UE, when the UE knows the time/frequency resources on which the cell performs SSFD and/or SBFD operation, the UE may perform its operation differently according to whether the cell operates on HD resources, SBFD resources, or SSFD resources. For example, the UE may determine time/frequency resources for receiving DL signals/channels and/or transmitting UL signals/channels differently according to HD resources, SBFD resources, or SSFD resources, and perform transmission/reception accordingly.

In a time resource operating in HD, the gNB performs half-duplex operation in which it performs only one of DL transmission or UL reception over the entire frequency resources constituting the cell, and, in a time resource operating in SBFD or SSFD, the gNB may perform FD operation in which it performs DL transmission through first frequency resources (e.g., DL sub-band resources) within the frequency resources constituting the cell and simultaneously performs UL reception through second frequency resources (e.g., UL sub-band resources) within the frequency resources constituting the cell.

- For this purpose, the gNB determines/identifies time resources corresponding to first time resources (e.g., HD symbols) and second time resources (e.g., FD symbols), and transmits configuration information related to the first time resources (e.g., HD symbols) and/or the second time resources (e.g., FD symbols) to the UE. The term FD symbol may include both SBFD symbols and SSFD symbols. More specifically, the gNB determines/identifies time resources corresponding to HD symbols, SBFD symbols, and/or SSFD symbols, and transmits configuration information related to the HD symbols, SBFD symbols, and/or SSFD symbols to the UE.
- In this case, in time resources operating in SBFD and time resources operating in SSFD, the DL sub-band resources and/or UL sub-band resources may be configured differently from each other. In time resources operating in SBFD, the DL sub-band resources and the UL sub-band resources are configured not to overlap each other. In time resources operating in SSFD, the DL sub-band resources and the UL sub-band resources may be configured to overlap each other. The DL sub-band/UL sub-band resources may be configured with not only a portion of the frequency resources of the system bandwidth but also the entire frequency resources.

The UE receives configuration information on HD symbols, SBFD symbols, and/or SSFD symbols from the network and determines the positions of the HD symbols, SBFD symbols, and/or SSFD symbols. In this case, in an HD symbol, the UE performs DL reception (UL transmission) through the entire frequency resources configured for the UE to operate DL reception (UL transmission), and in an SBFD symbol and/or an SSFD symbol, the UE performs DL reception (UL transmission) through DL sub-band (UL sub-band) resources that are the same as or restricted from the frequency resources on which the UE performs DL reception (UL transmission) in an HD symbol. In this case, even if the UE is configured to perform DL reception (UL transmission) on frequency resources other than DL sub-band resources (UL sub-band resources) in SBFD symbol and/or SSFD symbol resources, the UE does not perform DL reception (UL transmission) on frequency resources other than DL sub-band resources (UL sub-band resources).

Specific embodiments of the present disclosure

The base station may operate technologies for NES purposes such as controlling the on/off of the UE over a certain duration on a time axis, controlling transmission/reception resources for UE-common or UE-specific signals/channels, changing the amount of resources in a frequency axis, controlling transmission power, or turning on/off antenna ports, TRPs, etc. in a spatial domain. In the present disclosure, the listed technologies are referred to as 'NES technology' or 'NES_tech', and a state in which at least one of the NES_techs is applied is referred to as 'NES mode' or 'NES state'. The base station may inform the UE which NES_tech(s) are applied for each NES_tech or NES_tech group [Approach 1], or may pre-configure the NES_tech or NES_tech group(s) corresponding to each code-point of a specific indicator [Approach 2]. Here, the specific indicator may be indicated through DCI or MAC CE, or may be configured through higher layer signaling.

In the case of Approach 1, when at least one NES_tech is applied to the UE, the state may be defined as an NES mode or NES state, and furthermore, may be treated as a different NES mode or a different NES state depending on which NES_tech is applied. The NES mode or NES state may be used as a concept indicating whether at least one NES technology is applied, or, in addition thereto, further indicating which NES technology(ies) is applied. When the NES mode or NES state further indicates which NES technology(ies) is applied, different NES modes or different NES states may include different combinations of NES_techs. In the case of Approach 2, for example, when a 1-bit indicator is used, '0' may indicate that the corresponding NES_tech is not applied, and '1' may indicate that at least one NES_tech is applied. In this case, when '1' is indicated through the corresponding indicator, the state may be defined as an NES mode or NES state. In another example, when a 2-bit indicator is used, '00' may indicate that there is no corresponding NES_tech, '01' may indicate that at least one NES_tech_A is applied, '10' may indicate that at least one NES_tech_B is applied, and '11' may indicate that at least one NES_tech_C is applied. In this case, when a code-point other than '00' is indicated through the corresponding indicator, the state may be defined as an NES mode or NES state. Furthermore, the UE may determine NES state #1 when '01' is detected, NES state #2 when '10' is detected, and NES state #3 when '11' is detected. Accordingly, whether the state is an NES state and/or which NES state it is may be distinguished for each code-point.

For NES purposes, the base station may turn on/off certain spatial elements (e.g., antenna ports, active transmit/receive chains, panels, or TRPs) or adjust power values for downlink signals/channels. To dynamically apply various NES technologies in the spatial domain and power domain, the base station may associate, for one CSI report configuration (e.g., CSI-ReportConfig), CSI-RS resources or resource sets having different antenna ports, or may associate a plurality of power offsets (e.g., a powerControlOffset parameter representing a power offset value between PDSCH and CSI-RS, a powerControlOffsetSS parameter representing a power offset value between SSS and CSI-RS, etc.).

Specifically, at least one CSI framework among the following methods may be introduced.

- Framework #1: For one CMR (channel measurement resource) or one IMR (interference measurement resource) within a CSI-ReportConfig configuration, a plurality of CSI-RS resource sets are associated. Here, the CMR may be configured by a resourcesForChannelMeasurement parameter, and the IMR may be configured by a csi-IM-ResourcesForInterference parameter or an nzp-CSI-RS-ResourcesForInterference parameter. For example, CSI-RS resource set #1 and CSI-RS resource set #2 may be associated for the CMR, and the CSI-RS resources belonging to CSI-RS resource set #1 may be composed of 16 antenna ports (APs), and the CSI-RS resources belonging to CSI-RS resource set #2 may be composed of 8 antenna ports.
- Framework #2: When one CSI-RS resource set related to one CMR or one IMR within a CSI-ReportConfig configuration is configured, one or more CSI-RS resources in the corresponding CSI-RS resource set may be configured with different attributes such as the number of APs and/or power offsets. For example, for CSI-RS resource set #1 configured as the CMR, CSI-RS resource #1 belonging to CSI-RS resource set #1 may be configured with 16 APs, and CSI-RS resource #2 belonging to the same set may be configured with 8 APs. For example, for CSI-RS resource set #1 configured as the CMR, CSI-RS resource #1 belonging to CSI-RS resource set #1 may be configured with power offset #1, and CSI-RS resource #2 belonging to the same set may be configured with power offset #2.
- Framework #3: When one CSI-RS resource set related to one CMR or one IMR within a CSI-ReportConfig configuration is configured, some or all of the CSI-RS resources in the corresponding set may be configured with a plurality of AP numbers and/or power offset values. For example, for CSI-RS resource set #1 configured as the CMR, CSI-RS resource #1 belonging to CSI-RS resource set #1 may be configured with up to 16 APs, and CSI reporting using at least one AP among them may be configured. Alternatively, CSI-RS resource #2 belonging to the same CSI-RS resource set #1 may be configured with a plurality of power offset values, and CSI reporting using all or some of the power offsets may be configured.

In the CSI frameworks described above, the CSI reporting method may be defined through at least one of the following options.

- Option #1: CSIs considering a plurality of AP numbers and/or a plurality of power offset values configured for one CSI report may all be included in one CSI report. Alternatively, CSIs considering a plurality of AP numbers and/or a plurality of power offset values may be included in one CSI report through configuration and/or indication by the base station. Here, the AP numbers and/or power offset values configured and/or indicated by the base station may be a part of the AP numbers and/or power offset values configured for the corresponding CSI report.
- Option #2: Even when a plurality of AP numbers and/or a plurality of power offset values are configured for one CSI report, CSIs considering a single AP number and/or a single power offset value may be included in one CSI report through configuration and/or indication by the base station.
- Option #3: Even when a plurality of AP numbers and/or a plurality of power offset values are configured for one CSI report, CSIs considering some AP numbers and/or some power offset values may be included in one CSI report through UE determination/decision. Here, the UE determination/decision may be based on a configuration by the base station or on pre-defined criteria.

In the CSI-ReportConfig, L sub-configurations greater than 1 may be configured, and each sub-configuration may correspond to one spatial domain adaptation pattern or one power domain adaptation pattern. Here, a spatial domain adaptation pattern may correspond to a specific AP number or AP on/off pattern, or may correspond to a specific CSI-RS power value. Here, the CSI-RS power value may include a CSI-RS power value determined by a parameter (e.g., powerControlOffsetSS) indicating a power offset value between SSS and CSI-RS. In addition, the reason why the spatial domain adaptation pattern may correspond to the CSI-RS power value is that a turn-off of some antenna elements corresponding to one AP may affect the CSI-RS power value.

When Framework #2 is applied, if CSI-RS index #n1 belonging to a resource set is configured with the number of A1 APs or a power value P1, and CSI-RS index #n2 belonging to the same resource set is configured with the number of A2 APs or a power value P2, CSI-RS index #n1 may be related to sub-configuration index #s1, and CSI-RS index #n2 may be related to sub-configuration index #s2.

When Framework #3 is applied, if CSI-RS index #n1 belonging to a resource set is configured with the number of A1 APs or power values P1/P2, sub-configuration index #s1 may be related to the number of A1 APs or the power value P1, and sub-configuration index #s2 may be related to the number of A2 APs, which is smaller than A1 and corresponds to CSI-RS index #n1, or with the power value P2. Accordingly, the spatial domain adaptation pattern may be configured differently for each sub-configuration. Here, a difference in the power domain adaptation pattern may mean that the power offset value (e.g., a power offset value determined by a powerControlOffset parameter representing a power offset value between PDSCH and CSI-RS, a powerControlOffsetSS parameter representing a power offset value between SSS and CSI-RS, etc.) is different.

When Framework #2 is applied, if CSI-RS index #n1 belonging to a resource set is configured with a power value P1, and CSI-RS index #n2 belonging to the same resource set is configured with a power value P2, CSI-RS index #n1 may be related to sub-configuration index #s1, and CSI-RS index #n2 may be related to sub-configuration index #s2. Accordingly, the power domain adaptation pattern may be configured differently for each sub-configuration.

When Framework #3 is applied, if CSI-RS index #n1 belonging to a resource set is configured with a power value P1 and a power value P2, sub-configuration index #s1 may be related to the power value P1, and sub-configuration index #s2 may be related to the power value P2. Accordingly, the power domain adaptation pattern may be configured differently for each sub-configuration. The UE may feedback to the base station a CSI report including CSIs corresponding to N sub-configurations, which are 1 to L, by utilizing one of Option#1/2/3 among L sub-configurations.

The base station may, for NES purposes, turn on and off certain spatial elements (e.g., APs, active transceiver chains, panels, or TRPs). Accordingly, invalid CSI-RS resources, CSI-RS resource sets, or SSB indexes may occur, and problems may arise in the UE performing transmission/reception of TCI or spatial relation information corresponding thereto and the corresponding DL/UL signals (e.g., CSI-RS, PDCCH, PDSCH, SRS, PUSCH, PUCCH, etc.). For example, if the base station turns on only 16 APs, a CSI-RS resource or CSI-RS resource set configured with 32 APs is invalid.

Accordingly, the present disclosure proposes a method for configuring TCI or spatial relation information and for transmitting/receiving DL/UL signals (e.g., CSI-RS, PDCCH, PDSCH, SRS, PUSCH, PUCCH, etc.) related to the configuration, when the base station turns on and off spatial elements for NES.

[Embodiment #1] Mode Switching

Different modes may be configured according to the on/off states of the spatial elements of the base station, and switching between the modes (hereinafter referred to as 'mode switching') may be indicated through L1/L2 signaling (e.g., cell-common DCI, UE group-common DCI, UE-specific DCI, or MAC CE). That is, a plurality of modes may be defined based on differences in the on/off combinations of spatial elements, and switching between the modes may be indicated through signaling. In the present disclosure, a mode according to the state of spatial elements may be referred to as a 'spatial element mode', a 'spatial hardware mode', or another term having an equivalent technical meaning. In addition, in the present disclosure, the spatial element mode may be understood as a concept included in the NES mode or NES state. Specifically, the NES mode is understood as a concept encompassing the control of all factors related to reduction of power consumption, and the spatial element mode is understood as a mode related to reduction of power consumption through control of resources in the spatial domain, such as antennas. This embodiment relates to the configuration of TCI or spatial relation information according to the mode switching and/or the method of transmitting/receiving DL/UL signals (e.g., CSI-RS, PDCCH, PDSCH, SRS, PUSCH, PUCCH, etc.) related to the configuration.

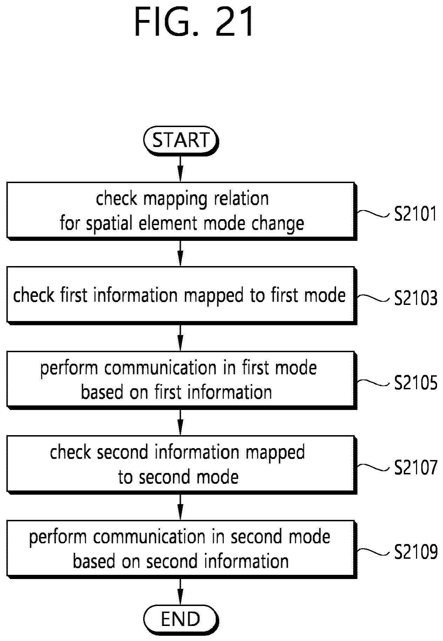

FIG. 21 illustrates an example procedure for switching a spatial element mode according to an embodiment of the present disclosure. FIG. 21 exemplifies a method performed by the UE.

Referring to FIG. 21, in step S2101, the UE checks a mapping relationship for changing the spatial element mode. The spatial element mode may be related to at least one pre-defined configuration factor. That is, the spatial element mode may change according to a change in the designated configuration factor. Based on the mapping relationship, when the UE detects a configuration factor configured to first information, the UE may determine the spatial element mode as a first mode, and when the UE detects a configuration factor configured to second information, the UE may determine the spatial element mode as a second mode. The mapping relationship between the spatial element mode and the configuration factor may be pre-defined, or may be explicitly or implicitly signaled to the UE.

In step S2103, the UE checks first information mapped to the first mode. The first information related to the first mode may be implemented in various forms. In one example, the first information may be related to at least one of an NES state, a spatial element, a resource/resource set included in a CSI report configuration, a sub-configuration included in a CSI report configuration, TCI, or a spatial relation information configuration. In one example, the spatial element includes at least one of parameters related to APs, active transceiver chains, panels, or TRPs, and may correspond to a specific spatial element mode according to a combination of parameter values. The UE may receive the first information through higher layer signaling, MAC CE, or DCI.

In step S2105, the UE performs communication in the first mode based on the first information. Since the first mode specifies the spatial elements used at the base station, the UE may perform communication on the premise of using the spatial elements corresponding to the first mode. Accordingly, the UE may perform transmission or reception of CSI-RS, PDCCH, PDSCH, SRS, PUSCH, or PUCCH based on the configuration of TCI or spatial relation information corresponding to the first mode.

In step S2107, the UE checks second information mapped to the second mode from the base station. The second information is a configuration factor of the same type as the first information and may include a value different from that of the first information. For example, the UE may receive the second information through higher layer signaling, MAC CE, or DCI.

In step S2109, the UE performs communication in the second mode based on the second information. Since the second mode specifies the spatial elements used at the base station, the UE may perform communication on the premise of using the spatial elements corresponding to the second mode. Accordingly, the UE may perform transmission or reception of CSI-RS, PDCCH, PDSCH, SRS, PUSCH, or PUCCH based on the configuration of TCI or spatial relation information corresponding to the second mode.

In the embodiment described with reference to FIG. 21, the configuration parameter related to the spatial element mode may be defined in various ways. Hereinafter, the present disclosure describes specific embodiments of switching the spatial element mode according to the configuration parameter.

- The NES state or NES mode may be related to the mode. For example, when NES state #1 and NES state #2 are configured/defined and are each related to mode #A and mode #B, if it is configured and/or indicated that the base station operates in NES state #1, the UE may perform an operation related to mode #A, and if it is configured and/or indicated that the base station operates in NES state #2, the UE may perform an operation related to mode #B.

- The on/off state of the base station spatial elements and/or the power state of DL signals/channels (e.g., SSB transmission power, NZP-CSI-RS transmission power, power offset between CSI-RS and PDSCH) may be related to the mode. For example, when the case in which the number of active antenna ports (APs) of the base station is greater than or equal to K (e.g., K = 16) and the case in which it is less than K are each related to mode #A and mode #B, if it is configured and/or indicated that the number of active APs of the base station is greater than or equal to K, the UE may perform an operation related to mode #A, and if it is configured and/or indicated that it is less than K, the UE may perform an operation related to mode #B. In another example, when the case in which the power offset value between PDSCH and CSI-RS assumed for CSI feedback by the UE is greater than or equal to X (e.g., X = 0) dB and the case in which it is less than X are each related to mode #A and mode #B, if it is configured and/or indicated that the offset value is greater than or equal to X, the UE may perform an operation related to mode #A, and if it is configured and/or indicated that it is less than X, the UE may perform an operation related to mode #B.

- The activated index/group index among the indexes of the configured CSI-RS resource/resource set or CSI report configuration (e.g., CSI-ReportConfig or CSI-ResourceConfig) may be related to the mode. For example, when an index(es) of a specific CSI-RS resource/resource set or CSI report configuration (e.g., CSI-ReportConfig or CSI-ResourceConfig) is related to mode #A, and an index(es) of another specific CSI-RS resource/resource set or CSI report configuration (e.g., CSI-ReportConfig or CSI-ResourceConfig) is related to mode #B, it is determined which index(es) of the CSI-RS resource/resource set or CSI reporting configuration (e.g., CSI-ReportConfig or CSI-ResourceConfig) is activated depending on the configuration and/or instructions of the base station, and accordingly, the UE may perform an operation related to mode #A or mode #B. In another example, the indexes of the CSI-RS resource/resource set or CSI report configuration (e.g., CSI-ReportConfig or CSI-ResourceConfig) may be grouped in advance. When group #1 and group #2 are respectively related to mode #A and mode #B, the UE may perform an operation related to mode #A or mode #B according to which group is configured and/or indicated to be activated.

- When L sub-configurations (hereinafter referred to as 'sub-cfgs') are included in a CSI report configuration and a CSI report including CSI information corresponding to N of the L sub-configurations is performed, the information of the N sub-configurations (e.g., where N is between 1 and L) may be indicated/triggered/activated through DCI or MAC CE. In this case, the mode may change according to the indicated/activated/triggered N sub-configuration(s). That is, differently combined sets of indicated/activated/triggered sub-configurations are treated as different modes. For example, when L = 2, the three combinations {sub-cfg #1, sub-cfg #2}, {sub-cfg #1}, and {sub-cfg #2} may be defined as different mode #A, mode #B, and mode #C, respectively, and depending on which combination of sub-configuration(s) is indicated/triggered/activated, the UE may perform an operation related to mode #A, mode #B, or mode #C.

Alternatively, the mode may be defined based on the lowest or highest index value among the indicated/activated/triggered sub-configuration(s). For example, when L = 2, among the three combinations {sub-cfg #1, sub-cfg #2}, {sub-cfg #1}, and {sub-cfg #2}, since {sub-cfg #1, sub-cfg #2} and {sub-cfg #1} have the same lowest index of 1, {sub-cfg #1, sub-cfg #2} and {sub-cfg #1} may be defined as mode #A, and {sub-cfg #2} may be defined as mode #B.

Meanwhile, even when L sub-configuration indexes are configured, the mode change method may be applied only to some CSI report settings among the L. That is, for some CSI report configuration, the mode change method may not be applied, and accordingly, the mode may not change even if the sub-configuration index triggered/indicated/activated for the corresponding CSI report configuration changes. Whether the mode change method is applied may be configured per CSI report configuration, or may be determined by a pre-defined rule (e.g., applying the method to a CSI report configuration related to a change in the number of APs, applying the method to a CSI report configuration related to a change in the CSI-RS power value, not applying the method to a CSI report configuration related to a change in the power offset between CSI-RS and PDSCH, etc.). Depending on which combination of sub-configuration(s) is indicated/triggered/activated, the UE may perform an operation related to mode #A or mode #B.

According to one embodiment, the UE may change the mode according to the present method only when an NZP-CSI-RS configured for CMR and/or IMR use for the CSI report configuration is related thereto. Here, being related to the NZP-CSI-RS may mean that the NZP-CSI-RS is configured as a TCI, QCL, or spatial relation reference signal, or as a path loss reference signal, or may mean that a TCI state, joint TCI state, TCI UL state, joint TCI UL state, or spatial relation information is configured for the NZP-CSI-RS.

- The plurality of modes may be defined, and for each mode, the TCI configuration, the spatial relation information configuration, and/or the transmission/reception method of the DL/UL signals (e.g., CSI-RS, PDCCH, PDSCH, SRS, PUSCH, PUCCH, etc.) related to the configuration, as described later, may be determined. For example, when the TCI configuration method for mode #A is defined and the TCI configuration method for mode #B is determined, the UE may perform an operation related to mode #A or mode #B according to the configuration and/or indication of the mode of the base station.

In the methods described abovec, the DCI or MAC CE indicating switching between modes may be transferred in a UE-specific, UE group-common, or cell-specific manner. The DCI may be scrambled using an radio network temporary identifier (RNTI) configured as UE-specific, UE group-common, or cell-specific. The MAC CE may be transferred through a PDSCH scheduled by a DCI scrambled using an RNTI configured as UE-specific, UE group-common, or cell-specific. In addition, which bit location of the MAC CE is used to indicate switching between modes may be pre-configured. In this case, the carrier/serving cell on which the DCI or MAC CE is transmitted and the carrier/serving cell on which the switching is performed may be different, and the DCI or MAC CE may indicate switching for a plurality of carriers/serving cells. In this case, switching to a common mode for the plurality of carriers/serving cells may be indicated, or switching to different modes for each carrier/serving cell may be indicated.

According to one embodiment, switching between modes may be performed without a separate indicator, based on a pre-determined rule/configuration. For example, mode #A may be applied during a certain time period (e.g., DRX on-duration or active time), and mode #B may be applied during another time period. In another example, mode #A may be applied when operating in a specific BWP within one carrier, and mode #B may be applied when operating in another BWP within the same carrier.

When a UE performing switching between modes receives an indication for mode switching and intends to apply the TCI or spatial relation information configuration related to the indicated mode and/or the transmission/reception method of the DL/UL signals (e.g., CSI-RS, PDCCH, PDSCH, SRS, PUSCH, PUCCH, etc.) related to the configuration, an application time may be required. Specifically, when defining the time at which the UE receives an indicator for switching between modes as T1, and defining the time at which the UE can apply the TCI or spatial relation information configuration related to the indicated mode and/or the transmission/reception method of the DL/UL signals (e.g., CSI-RS, PDCCH, PDSCH, SRS, PUSCH, PUCCH, etc.) related to the configuration as T2, a minimum value of T2 - T1 that is possible for the UE, T_mode, may be defined. That is, the UE may apply the TCI or spatial relation information configuration related to the received mode and/or the transmission/reception method of the DL/UL signals (e.g., CSI-RS, PDCCH, PDSCH, SRS, PUSCH, PUCCH, etc.) related to the configuration after T_mode from the time when the UE receives the indicator for switching between modes. The T_mode value may be defined in absolute time units (e.g., msec, usec, etc.) or in a number of slots or symbols. When the T_mode value is defined as a number of slots or symbols, the reference SCS may be directly configured, defined as the same as the SCS of the active BWP, defined as the SCS of a specific BWP (e.g., initial/default BWP) configured in the serving cell, or defined as the highest or lowest SCS among the SCSs of the BWPs configured in the serving cell.

In addition, the T_mode value may be defined to be the same or different for each DL/UL signal/channel. When different T_mode values are defined for respective DL/UL signals/channels, the different T_mode values defined for each signal/channel may be actually applied. Alternatively, the maximum value among the different T_mode values defined for the respective signals/channels may be applied to all signals/channels.

In the embodiments described above, switching between two modes has been exemplified, but the proposed technique may be readily extended to cases where three or more modes are defined or configured and switching among three or more modes is performed. For example, in the case of a base station operating in a multi-panel manner, operation through three modes such as mode #A (e.g., a state with only panel #0 turned on), mode #B (e.g., a state with only panel #1 turned on), and mode #C (e.g., a state with both panel #0 and panel #1 turned on) may be efficient.

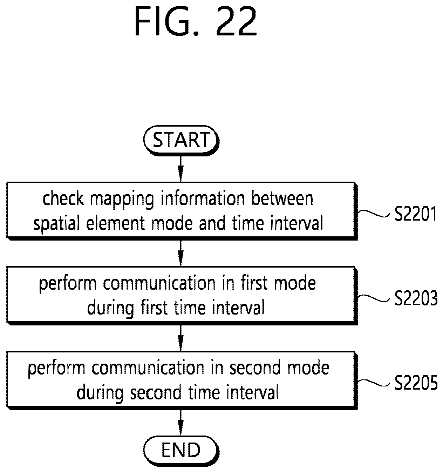

FIG. 22 illustrates an example procedure for switching a spatial element mode based on a time interval according to an embodiment of the present disclosure. FIG. 22 exemplifies a method performed by the UE.

Referring to FIG. 22, in step S2201, the UE checks the mapping relationship between the spatial element mode and the time interval. According to one embodiment, the UE may receive configuration information indicating the mapping relationship from the base station. For example, the configuration information may be signaled together with information for configuring the time intervals related to switching of the spatial element mode. According to another embodiment, the mapping relationship may be pre-defined. Depending on the configured or pre-defined mapping relationship, the spatial element mode may be switched according to the change of the time interval, without a separate indication, based on a pre-defined or pre-configured rule.

In step S2203, the UE performs communication in the first mode during the first time interval. The UE performs communication based on the first mode during at least a part of the period between the start and end of the first time interval. Since the first mode specifies the spatial elements used at the base station, the UE may perform communication on the premise of using the spatial elements corresponding to the first mode. Accordingly, the UE may perform transmission or reception of CSI-RS, PDCCH, PDSCH, SRS, PUSCH, or PUCCH based on the configuration of TCI or spatial relation information corresponding to the first mode. For example, the UE may determine a reference RS indicated by the TCI or spatial relation information based on the first mode and may transmit or receive a signal based on the reference RS.

In step S2205, the UE performs communication in the second mode during the second time interval. The UE performs communication based on the second mode during at least a part of the period between the start and end of the second time interval. Since the second mode specifies the spatial elements used at the base station, the UE may perform communication on the premise of using the spatial elements corresponding to the second mode. Accordingly, the UE may perform transmission or reception of CSI-RS, PDCCH, PDSCH, SRS, PUSCH, or PUCCH based on the configuration of TCI or spatial relation information corresponding to the second mode. For example, the UE may determine a reference RS indicated by the TCI or spatial relation information based on the second mode and may transmit or receive a signal based on the reference RS.

As described with reference to FIG. 22, the spatial element mode may be switched according to a change in the time interval. Here, the operating state or configuration of the UE or the base station may differ between the first time interval and the second time interval that cause the switching of the spatial element mode. The first time interval and the second time interval may be determined without instantaneous indication or signaling, according to a pre-configured rule (e.g., a rule defined based on an event, period, cycle, timer, or other condition). For example, the first time interval and the second time interval may be distinguished by different DRX/DTX operations, and, specifically, one of the first time interval and the second time interval may be a DRX on-duration or active time interval of the UE or the base station, and the other may not. In another example, the first time interval and the second time interval may be distinguished by the duplex mode, and one of the first time interval and the second time interval may be when the duplex mode of the UE or the base station is an FD (full duplex) mode or a subband FD mode, and the other may not.

When the base station and the UE perform HD operation in a first time resource and FD operation in a second time resource, the antenna configuration for different time resources may differ. In one example, during the period in which HD operation is performed, all antenna components may be used to perform transmission or reception, and during the period in which FD operation is performed, some antenna components may be used to perform transmission and the remaining antenna components may be used to perform reception. Since the transmit-side antenna configuration differs between the first time resource and the second time resource, switching of the spatial element mode may be required according to a change in the time interval for the transmission signal. Alternatively, considering that the receive-side antenna configuration differs between the first time resource and the second time resource, switching of the spatial element mode may be required according to a change in the time interval for the transmission signal. Considering this, the present disclosure proposes a method for switching the spatial element mode according to a change in the time interval.

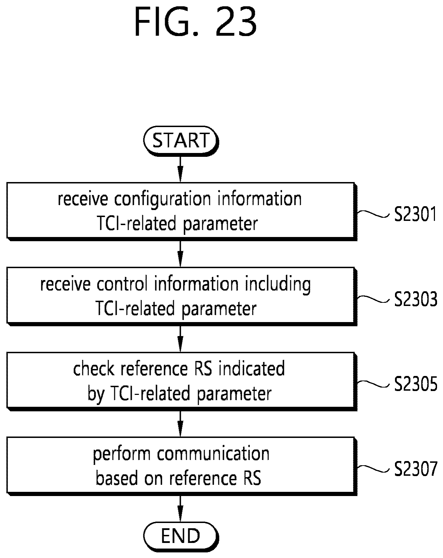

FIG. 23 illustrates an example procedure for switching a spatial element mode based on a time interval according to an embodiment of the present disclosure. FIG. 23 exemplifies a method performed by the UE.

Referring to FIG. 23, in step S2301, configuration information related to a TCI-related parameter is received. Here, the TCI-related parameter may be understood as one of a TCI state, a TCI UL state, and/or spatial relation information. The configuration information includes information related to the index of the TCI-related parameter and information related to a reference RS (e.g., at least one of SSB, CSI-RS, and SRS) corresponding to the index of the TCI-related parameter. In this case, according to one embodiment, a plurality of reference RSs may correspond to one value of the index of the TCI-related parameter.

In step S2303, the UE checks control information including the TCI-related parameter. The control information including the TCI-related parameter may be related to transmission or reception of a signal. For example, the UE may receive DCI as control information including the TCI-related parameter.

In step S2305, the UE checks the reference RS indicated by the TCI-related parameter. The TCI-related parameter is used to indicate the spatial similarity between the configured reference RS and the signal indicated by the control information. In this case, according to one embodiment of the present disclosure, the TCI-related parameter corresponds to a plurality of reference RSs, and the UE may determine which reference RS among the plurality of reference RSs is indicated by the TCI-related parameter based on the spatial element mode related to the time interval. That is, during the first time interval, the index of the TCI-related parameter may be interpreted as indicating the first reference RS, and during the second time interval, the index of the TCI-related parameter may be interpreted as indicating the second reference RS.

In step S2307, the UE performs communication based on the reference RS. The UE may transmit or receive a signal by using the characteristics of the reference RS that has a QCL relationship with the signal including the control information. For example, the UE may transmit or receive a signal configured or scheduled by the control information by using the spatial domain filter used to receive the reference RS from the base station.

[Embodiment #2] In configuring the TCI state, TCI UL state, and/or spatial relation information, a DL or UL signal serving as a QCL resource or RS is configured according to the mode, and a different QCL resource or RS is applied according to the activated mode.

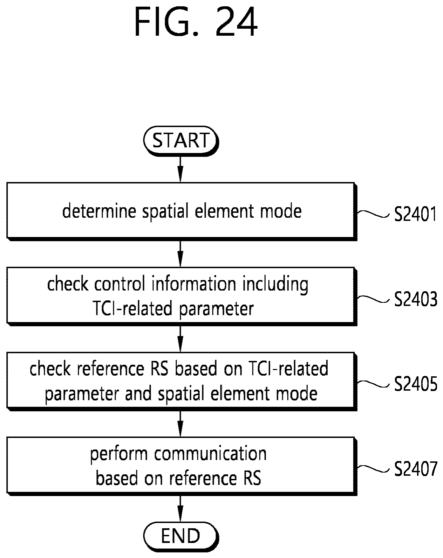

FIG. 24 illustrates an example procedure for performing communication based on the interpretation of a TCI-related parameter according to a spatial element mode, according to an embodiment of the present disclosure. FIG. 24 exemplifies a method performed by the UE.

Referring to FIG. 24, in step S2401, the UE determines the spatial element mode. The UE may explicitly or implicitly check the spatial element mode. For example, the UE may determine the spatial element mode based on the value of another configuration related to the spatial element mode.

In step S2403, the UE checks control information including the TCI-related parameter. Here, the TCI-related parameter may be understood as one of a TCI state, a TCI UL state, and/or spatial relation information. The control information including the TCI-related parameter may be related to transmission or reception of a signal. For example, the UE may receive DCI as control information including the TCI-related parameter.

In step S2405, the UE checks the reference RS based on the TCI-related parameter and the spatial element mode. The TCI-related parameter is used to indicate the spatial similarity between the configured reference RS and the signal indicated by the control information. In this case, according to one embodiment of the present disclosure, the TCI-related parameter corresponds to a plurality of reference RSs, and the UE may determine which reference RS among the plurality of reference RSs is indicated by the TCI-related parameter based on the spatial element mode.

In step S2407, the UE performs communication based on the reference RS. The UE may transmit or receive a signal by using the characteristics of the reference RS that has a QCL relationship with the signal including the control information. For example, the UE may transmit or receive a signal configured or scheduled by the control information by using the spatial domain filter used to receive the reference RS from the base station.

When the number of APs used by the base station or the types of APs change, the spatial characteristics such as the beam configuration of UE may change. By using the method described above, the reference RS indicated by the TCI-related parameter may be selected based on the spatial element mode, enabling efficient communication. Hereinafter, the present disclosure describes specific embodiments of interpreting the TCI-related parameter according to the spatial element mode.

Embodiment #2-1: In relation to the TCI-state IE configuration, one or two QCL types (e.g., qcl-type1, qcl-type2) may be configured, and for each QCL type, one DL RS (e.g., SSB index or NZP CSI-RS resource index) may be configured. According to the present embodiment, a plurality of DL RSs may be configured for each of the one or two QCL types, and each DL RS may be related to different modes. Depending on which mode is activated, the DL RS activated for each QCL type of the corresponding TCI state may differ.

For example, when qcl-type1 and qcl-type2 are configured in the TCI-State IE, and within qcl-type2, NZP CSI-RS resource index #1 related to mode #A and NZP CSI-RS resource index #2 related to mode #B are configured, if mode #A is activated by mode switching, NZP CSI-RS resource index #1 may be applied for the QCL resource configured in qcl-type2 of the corresponding TCI-State IE, and if mode #B is activated, NZP CSI-RS resource index #2 may be applied for the QCL resource configured in qcl-type2 of the corresponding TCI-State IE. As a specific example, when the corresponding TCI-State IE is configured as TCI state ID #N, and the UE receives a PDSCH scheduled using the TCI state ID #N, if mode #A is activated, the QCL resource referenced for receiving the PDSCH may be determined by NZP CSI-RS resource index #1, and if mode #B is activated, the QCL resource referenced for receiving the PDSCH may be determined by NZP CSI-RS resource index #2.

Embodiment #2-2: When configuring a TCI-UL-State IE, one DL/UL RS (e.g., SSB index, NZP CSI-RS resource index, or SRS resource index) may be configured in the referenceSignal field. When a DL/UL RS is configured in the referenceSignal field, it means that, for transmitting the UL signal/channel related to the corresponding TCI-UL-State IE, the same spatial domain filter used for receiving/transmitting the DL/UL RS configured in the referenceSignal field is used.

According to this embodiment, a plurality of DL/UL RSs may be configured in the referenceSignal field, and each DL/UL RS may be related to different modes. Depending on which mode is activated, the application of the value of the referenceSignal field of the corresponding TCI UL state may vary.

For example, in relation to configuring a TCI-UL-State IE, NZP CSI-RS index #1 related to mode #A and NZP CSI-RS index #2 related to mode #B may be configured as the referenceSignal. In this case, if mode #A is activated by mode switching, the referenceSignal configured in the corresponding TCI-UL-State IE may be determined by NZP CSI-RS index #1. Alternatively, if mode #B is activated, the value of the referenceSignal field configured in the corresponding TCI-UL-State IE may be determined by NZP CSI-RS index #2. As a specific example, when the corresponding TCI-UL-State IE is configured as TCI UL state ID #N, and the UE transmits an SRS indicated using the TCI UL state ID #N, if mode #A is activated, NZP CSI-RS index #1 may be applied as the value of the referenceSignal field for the SRS transmission, and if mode #B is activated, NZP CSI-RS index #2 may be applied as the value of the referenceSignal field for the SRS transmission.

Embodiment #2-3: In relation to the configuration of an IE related to spatial relation (e.g., PUCCH-SpatialRelationInfo related to PUCCH, SRS-SpatialRelationInfo related to SRS, or SpatialRelationInfo-PDC related to PDCCH), one DL/UL RS (e.g., SSB index, NZP CSI-RS resource index, SRS resource index, or PRS (positioning RS) index) may be configured in the referenceSignal field. When a DL/UL RS is configured in the referenceSignal field, it may mean that, for transmitting the UL signal/channel related to the corresponding SpatialRelationInfo, the same spatial domain filter used for receiving/transmitting the DL/UL RS configured in the referenceSignal field is used. According to this embodiment, a plurality of DL/UL RSs may be configured in the referenceSignal field, and each DL/UL RS may be related to different modes. Depending on which mode is activated, the application of the value of the referenceSignal field of the corresponding SpatialRelationInfo IE may vary.

For example, when NZP CSI-RS index #1 related to mode #A and NZP CSI-RS index #2 related to mode #B are configured in the referenceSignal field in the SpatialRelationInfo IE, if mode #A is activated by mode switching, NZP CSI-RS index #1 may be applied as the value of the referenceSignal field configured in the corresponding SpatialRelationInfo IE, and if mode #B is activated, NZP CSI-RS index #2 may be applied as the value of the referenceSignal field configured in the corresponding SpatialRelationInfo IE. When the corresponding SpatialRelationInfo IE is configured as SpatialRelationInfo ID #N and the UE transmits a PUCCH for which the SpatialRelationInfo ID #N is configured and/or indicated, if mode #A is activated, NZP CSI-RS index #1 may be applied as the value of the referenceSignal field for the PUCCH transmission, and if mode #B is activated, NZP CSI-RS index #2 may be applied as the value of the referenceSignal field for the PUCCH transmission.

Embodiment #2-4: In relation to configuring a TCI-State IE or a TCI-UL-State IE, one DL RS (e.g., SSB index or NZP CSI-RS resource index) may be set in the pathlossReferenceRS field. When a DL RS is configured in the pathlossReferenceRS field, it may mean determining the transmission power of a UL signal/channel based on path loss estimation performed using the corresponding DL RS. According to this embodiment, a plurality of DL RSs may be configured in the pathlossReferenceRS field, and each DL RS may be related to different modes. Depending on which mode is activated, the value of the pathlossReferenceRS field of the corresponding TCI state or TCI UL state may be applied differently.

For example, when NZP CSI-RS index #1 related to mode #A and NZP CSI-RS index #2 related to mode #B are set in the pathlossReferenceRS field in the TCI-State IE or TCI-UL-State IE, if mode #A is activated by mode switching, NZP CSI-RS index #1 may be applied as the value of the pathlossReferenceRS field configured in the corresponding TCI-State IE or TCI-UL-State IE, and if mode #B is activated, NZP CSI-RS index #2 may be applied as the value of the pathlossReferenceRS field configured in the corresponding TCI-State IE or TCI-UL-State IE.

[Embodiment #3] A different set of TCI states, a set of TCI UL states, or a set of spatial relation information may be configured according to the mode, and a different set may be applied according to the activated mode.

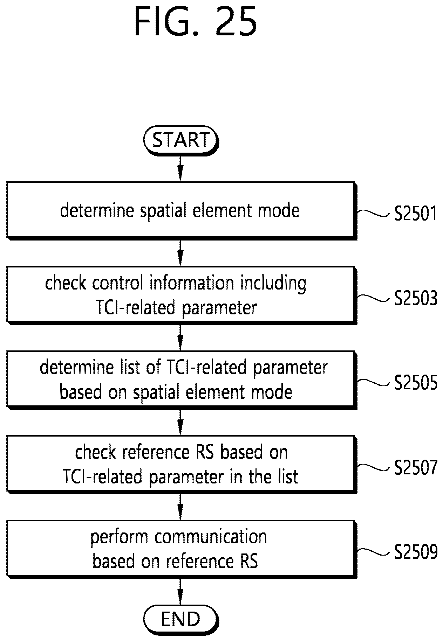

FIG. 25 illustrates an example procedure in which the UE performs communication based on a set of TCI-related parameters according to the spatial element mode, according to an embodiment of the present disclosure. FIG. 25 exemplifies a method performed by the UE.

Referring to FIG. 25, in step S2501, the UE determines the spatial element mode. The UE may explicitly or implicitly check the spatial element mode. For example, the UE may determine the spatial element mode based on the value of another configuration related to the spatial element mode.

In step S2503, the UE checks control information including the TCI-related parameter. Here, the TCI-related parameter may be understood as one of a TCI state, a TCI UL state, and/or spatial relation information. The control information including the TCI-related parameter may be related to transmission or reception of a signal. For example, the UE may receive DCI as control information including the TCI-related parameter.

In step S2505, the UE determines a list of TCI-related parameters based on the spatial element mode. Specifically, a plurality of lists of TCI-related parameters for the same purpose are configured for the UE, and the UE may check one list of TCI-related parameters corresponding to the spatial element mode. In this case, the mapping relationship between the spatial element mode and the list of TCI-related parameters may follow a pre-defined rule or may be indicated by the base station.

In step S2507, the UE checks the reference RS based on the TCI-related parameter within the determined list. The TCI-related parameter is used to indicate the spatial similarity between the configured reference RS and the signal indicated by the control information. Accordingly, the UE checks the reference RS indicated by the codepoint of the TCI-related parameter within the determined list. That is, the UE selects a list of TCI-related parameters based on the spatial element mode and may interpret the codepoint differently according to the selected list.

In step S2509, the UE performs communication based on the reference RS. The UE may transmit or receive a signal by using the characteristics of the reference RS that has a QCL relationship with the signal including the control information. For example, the UE may transmit or receive a signal configured or scheduled by the control information by using the spatial domain filter used to receive the reference RS from the base station.

Referring to FIG. 25, a situation in which a mapping relationship is formed between the spatial element mode and the list of TCI-related parameters has been described. However, the spatial element mode may also be extended to methods using other parameters. Accordingly, the spatial element mode may correspond to a list of spatial relation information indexes, and the spatial element mode may correspond to a method of interpreting the codepoint of a CSI request field or to candidates of the TCI-related parameter. Hereinafter, the present disclosure describes specific embodiments of selecting a list of TCI-related parameters according to the spatial element mode.

Embodiment #3-1: A plurality of TCI-related parameters may be managed and/or configured as one list. For example, the tci-StatesPDCCH-ToAddList field is a list of TCI state indexes applicable to a CORESET other than CORESET 0, the tci-StatesToAddModList field is a list of TCI state indexes applicable to a PDSCH and CORESET index 0, the dl-OrJointTCI-StateToAddModList field is a list of TCI state indexes applicable to DL/UL signals/channels, the ul-TCI-ToAddModList field is a list of TCI UL state indexes applicable to UL signals/channels, and the spatialRelationInfoToAddModList field is a list of spatial relation information indexes applicable to UL signals/channels. According to this embodiment, a plurality of lists may be configured, and each list may be related to different modes. Depending on which mode is activated, the activated list may differ, and based on the activated list, the index of the TCI-related parameter may be determined, and the determined index may be applied to the corresponding DL/UL signal/channel. This may be commonly applied/extended to the lists enumerated above, and among them, the case of the tci-StatesToAddModList field is exemplified as follows.

For example, in relation to the configuration of the tci-StatesToAddModList field, tci-StatesToAddModList index #1 related to mode #A and tci-StatesToAddModList index #2 related to mode #B may be configured in the tci-StatesToAddModList field, and for each codepoint of the 3 bits in the TCI field of DCI format 1_1, TCI state indexes #1/#2/#3 may be mapped. In this case, if mode #A is activated by mode switching, the TCI state indexes #1/#2/#3 configured in tci-StatesToAddModList index #1 may be mapped to each TCI field, and if mode #B is activated, the TCI state indexes #1/#2/#3 configured in tci-StatesToAddModList index #2 may be mapped to each TCI field.

Similarly, tci-StatesToAddModList index #1 may be mapped to TCI state indexes #1/#2/#3, and tci-StatesToAddModList index #2 may be mapped to TCI state indexes #2/#4/#6. In this case, if mode #A is activated by mode switching, the TCI state indexes #1/#2/#3 configured in tci-StatesToAddModList index #1 may be mapped to each TCI field, and if mode #B is activated, the TCI state indexes #2/#4/#6 configured in tci-StatesToAddModList index #2 may be mapped to each TCI field.

As another example, in relation to the configuration of the spatialRelationInfoToAddModList, spatialRelationInfoToAddModList index #1 related to mode #A and spatialRelationInfoToAddModList index #2 related to mode #B may be configured in the spatialRelationInfoToAddModList field, and for a specific PUCCH resource index #n, a spatial relation information index #k may be linked. In this case, if mode #A is activated by mode switching, the spatial relation information index #k configured in spatialRelationInfoToAddModList index #1 may be linked to the corresponding PUCCH resource index #n, and if mode #B is activated, the spatial relation information index #k configured in spatialRelationInfoToAddModList index #2 may be linked to the corresponding PUCCH resource index #n.

Similarly, in relation to the configuration of the spatialRelationInfoToAddModList, for spatialRelationInfoToAddModList index #1 related to mode #A, a spatial relation information index #k1 may be linked, and for spatialRelationInfoToAddModList index #2 related to mode #B, a spatial relation information index #k2 may be linked. In this case, if mode #A is activated by mode switching, the spatial relation information index #k1 configured in spatialRelationInfoToAddModList index #1 may be linked to the corresponding PUCCH resource index #n, and if mode #B is activated, the spatial relation information index #k2 configured in spatialRelationInfoToAddModList index #2 may be linked to the corresponding PUCCH resource index #n.

Embodiment #3-1-1: In the case of aperiodic CSI (AP-CSI) reporting, the UE may feed back values such as CQI/PMI/RI measured using the CSI-RS configured by the CSI-AperiodicTriggerStateList parameter corresponding to the codepoint indicated in the CSI request field of the UL grant scheduling the PUSCH, through the scheduled PUSCH. According to this embodiment, a plurality of lists may be configured in the AperiodicTriggerStateList field, and the lists may be related to different modes. Depending on which mode is activated, the activated list may differ, and the codepoint in the CSI request field of the UL grant may be interpreted differently based on the activated list.

**EP 4 668 890 A1**

For example, in relation to the configuration of the AperiodicTriggerStateList field, AperiodicTriggerStateList index #1 related to mode #A and AperiodicTriggerStateList index #2 related to mode #B may be configured as the tci-StatesToAddModList. In this case, if mode #A is activated by mode switching, each CSI-AperiodicTriggerState configured in AperiodicTriggerStateList index #1 may be mapped to the codepoints in the CSI request field of the UL grant, and if mode #B is activated, each CSI-AperiodicTriggerState configured in AperiodicTriggerStateList index #2 may be mapped to the codepoints in the CSI request field of the UL grant.

Embodiment #3-2: A plurality of candidates of TCI-related parameters (e.g., TCI state, TCI UL state, spatial relation information, or DL/UL RS) may be pre-configured and/or indicated, and different candidates may be applied according to the activated mode.

- In relation to the corresponding CORESET configuration for a PDCCH, at least one TCI state index related to each mode may be configured and/or indicated through RRC signaling and/or MAC CE, and the UE may apply different at least one TCI state index according to the activated mode in order to receive the corresponding PDCCH. When configuring the ControlResourceSet IE, one or more TCI state indexes may be linked for each mode.

For example, when TCI state index #0 is linked to mode #A and TCI state index #1 is linked to mode #B, for receiving the PDCCH in the corresponding CORESET resource, TCI state index #0 may be applied when mode #A is activated, and TCI state index #1 may be applied when mode #B is activated. As another example, when TCI state indexes {#0, #1, #2} are linked in the ControlResourceSet IE configuration, and it is indicated through a MAC CE for one mode or for each mode that TCI state index #0 is related to mode #A and TCI state index #1 is related to mode #B, for receiving the PDCCH in the corresponding CORESET resource, TCI state index #0 may be applied when mode #A is activated, and TCI state index #1 may be applied when mode #B is activated.

- For the PUCCH, a PUCCH-SpatialRelationInfo index related to each mode may be configured and/or indicated through RRC signaling and/or a MAC CE, and the UE may apply a different PUCCH-SpatialRelationInfo index according to the activated mode for transmitting the corresponding PUCCH.

For example, when PUCCH-SpatialRelationInfo index #0 is linked to mode #A and PUCCH-SpatialRelationInfo index #1 is linked to mode #B, for PUCCH transmission in the corresponding BWP, PUCCH-SpatialRelationInfo index #0 may be applied when mode #A is activated, and PUCCH-SpatialRelationInfo index #1 may be applied when mode #B is activated. In another example, when PUCCH-SpatialRelationInfo indexes {#0, #1, #2} are linked in the PUCCH-Config configuration, and through a one or each mode-specific MAC CE, for one PUCCH resource #n, it is indicated that PUCCH-SpatialRelationInfo index #0 is related to mode #A and PUCCH-SpatialRelationInfo index #1 is related to mode #B, for transmitting the corresponding PUCCH resource #n, PUCCH-SpatialRelationInfo index #0 may be applied when mode #A is activated, and PUCCH-SpatialRelationInfo index #1 may be applied when mode #B is activated.

- For PDSCH, a TCI state index linked to each mode may be configured and/or indicated through RRC signaling and/or a MAC CE, and the UE may apply a different TCI state index depending on the activated mode in order to receive the corresponding PDSCH. For example, TCI state indexes corresponding to each codepoint of the field indicating TCI in a DCI format may be configured and/or indicated differently for each mode. Specifically, when TCI state indexes {#0, #2, #4} linked to mode #A are mapped to each codepoint and TCI state indexes {#1, #3, #5} linked to mode #B are mapped to each codepoint, in interpreting the TCI field in the corresponding DCI format, it may be assumed that TCI state indexes {#0, #2, #4} are mapped to each codepoint when mode #A is activated, and that TCI state indexes {#1, #3, #5} are mapped to each codepoint when mode #B is activated. The mapping relationship between the codepoints and the TCI state indexes may be indicated through a one or each mode-specific MAC CEs.
- For a unified TCI state, a TCI state index linked to each mode may be configured and/or indicated through RRC signaling and/or a MAC CE, and the UE may apply different TCI state indexes depending on the activated mode in order to receive/transmit the linked DL/UL signal. For example, TCI state indexes corresponding to each codepoint of the field indicating TCI in a DCI format may be configured and/or indicated differently for each mode. Specifically, when TCI state indexes {#0, #2, #4} for mode #A are mapped to each of the codepoints and TCI state indexes {#1, #3, #5} for mode #B are mapped to each of the codepoints, in interpreting the TCI field in the corresponding DCI format, it may be assumed that TCI state indexes {#0, #2, #4} are mapped to the codepoints when mode #A is activated, and that TCI state indexes {#1, #3, #5} are mapped to the codepoints when mode #B is activated. The mapping relationship between the codepoints and the TCI state indexes may be indicated through a one or each mode-specific MAC CEs (e.g., a unified TCI state activation/deactivation MAC CE).
- For a DL/UL signal (e.g., CSI-RS, SRS), a TCI state index, an NZP CSI-RS resource index, or a TCI UL state index linked to each mode may be configured and/or indicated through RRC signaling and/or a MAC CE, and the UE may apply a different TCI state index, NZP CSI-RS resource index, or TCI UL state index according to the TCI UL state to the activated mode in order to receive/transmit the corresponding DL/UL signal. For example, in the NZP-CSI-RS-Resource IE configuration, a TCI state index corresponding to qcl-InfoPeriodicCSI-RS may be configured and/or indicated differently for each mode. Specifically, when TCI state index #0 is configured and/or indicated for mode #A, and TCI state index #1 is configured and/or indicated for mode #B, TCI state index #0 may be applied as QCL information when mode #A is activated, and TCI state index #1 may be applied as QCL information when mode #B is activated. As another example, in the SRS-ResourceSet IE configuration, an NZP CSI-RS resource index corresponding to associatedCSI-RS may be configured and/or indicated differently for each mode. Specifically, when NZP CSI-RS resource index #0 is configured and/or indicated for mode #A, and NZP CSI-RS resource index #1 is configured and/or indicated for mode #B, NZP CSI-RS resource index #0 may be applied as associated RS information when mode #A is activated, and NZP CSI-RS resource index #1 may be applied as associated RS information when mode #B is activated. As another example, in the SRS-Resource IE configuration, a TCI state or TCI UL state index corresponding to srs-TCIState may be configured and/or indicated differently for each mode. Specifically, when TCI (UL) state index #0 is configured and/or indicated for mode #A, and TCI (UL) state index #1 is configured and/or indicated for mode #B, TCI (UL) state index #0 may be applied when mode #A is activated, and TCI (UL) state index #1 may be applied when mode #B is activated.

- For a channel (e.g., PUCCH, PUSCH, etc.), in the pathloss reference RS or MPE resource configuration, an SSB index or NZP CSI-RS resource index associated with each mode may be configured and/or indicated through RRC signaling and/or MAC CE. In this case, to transmit a corresponding UL signal, the UE may apply a different SSB index or NZP CSI-RS resource index depending on the activated mode.

- In an RMTC (e.g., RMTC-Config) configuration, a TCI state index related to each mode may be configured through RRC signaling. In this case, to perform the corresponding received signal strength indicator (RSSI) measurement, the UE may apply a different TCI state index depending on the activated mode.

- In a CG PUSCH (e.g., type 1 CG PUSCH activated only through RRC configuration) configuration, an SRS resource index (e.g., srs-ResourceIndicator) related to each mode may be configured through RRC signaling. In this case, to perform the corresponding CG PUSCH transmission, the UE may apply a different SRS resource index depending on the activated mode.

- In interpreting the SRS resource indicator field in a DCI for triggering SRS and/or a DCI for scheduling PUSCH, the UE may apply different SRS resource set indexes according to the activated mode to interpret the corresponding field. For example, when SRS resource set index #0 is linked to mode #A and SRS resource set index #1 is linked to mode #B, in interpreting the codepoint of the SRS resource indicator field in the DCI for triggering SRS and/or the DCI for scheduling PUSCH, the codepoint of the SRS resource indicator field may be understood based on SRS resource set index #0 when mode #A is activated, and based on SRS resource set index #1 when mode #B is activated.

[Embodiment #4] Resource sets for separate DL/UL signals/channels (e.g., CORESET, PUCCH) may be pre-configured according to a mode, and different DL/UL signals/channels may be received/transmitted according to an activated mode.

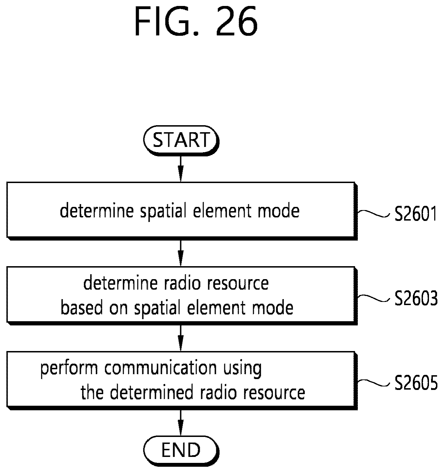

FIG. 26 illustrates an example of a procedure in which a UE selects a radio resource based on a spatial element mode according to an embodiment of the present disclosure. FIG. 26 exemplifies a method performed by the UE.

Referring to FIG. 26, in step S2601, the UE determines a spatial element mode. The UE may explicitly or implicitly check the spatial element mode. For example, the UE may determine the spatial element mode based on a value of another configuration related to the spatial element mode.

In step S2603, the UE determines a radio resource based on the spatial element mode. The UE may select the radio resource based on a mapping relationship between the spatial element mode and the radio resource. In this case, although not illustrated in FIG. 26, the UE may determine the radio resource after receiving information related to configuration or use of the radio resource.

In step S2605, the UE performs communication using the determined radio resource. In other words, the UE may transmit or receive a signal using the determined radio resource.

As described with reference to FIG. 26, the radio resource for a given signal or channel may vary depending on the spatial element mode. Hereinafter, the present disclosure describes specific embodiments of radio resource selection according to the spatial element mode.

Embodiment #4-1: When CORESET index 1 is related to mode #A and CORESET index 2 is related to mode #B, the UE may perform PDCCH monitoring according to the activated mode. Specifically, when mode #A is activated, the UE may perform PDCCH monitoring corresponding to CORESET index 1 and may not monitor the PDCCH corresponding to CORESET index 2. In contrast, when mode #B is activated, the UE may perform PDCCH monitoring corresponding to CORESET index 2 and may not monitor the PDCCH corresponding to CORESET index 1. As shown in [Table 1] below, when the UE receives a plurality of CORESETs having different QCL type D in a specific PDCCH monitoring occasion, the UE may perform PDCCH monitoring for some CORESETs according to a predetermined priority defined in the specification, and may not perform PDCCH monitoring for the remaining CORESETs. In this case, only for the CORESET(s) related to the activated mode, the UE may perform PDCCH monitoring according to the priority rule defined in [Table 13] below. [Table 13] is an excerpt from section 10.1 of TS 38.223 v17.5.0.

[Table 13]

If a UE
- is configured for single cell operation or for operation with carrier aggregation in a same frequency band, and
- monitors PDCCH candidates in overlapping PDCCH monitoring occasions in multiple CORESETs that have been configured with same or different *qcl-Type* set to 'typeD' properties on active DL BWP(s) of one or more cells

the UE monitors PDCCHs only in a CORESET, and in any other CORESET from the multiple CORESETs that have been configured with *qcl-Type* set to same 'typeD' properties as the CORESET, on the active DL BWP of a cell from the one or more cells
- the CORESET corresponds to the CSS set with the lowest index in the cell with the lowest index containing CSS, if any; otherwise, to the USS set with the lowest index in the cell with lowest index
- the lowest USS set index is determined over all USS sets with at least one PDCCH candidate in overlapping PDCCH monitoring occasions

If a UE
- is configured for single cell operation or for operation with carrier aggregation in a same frequency band,
- monitors PDCCH candidates in overlapping PDCCH monitoring occasions in multiple CORESETs that have been configured with same or different *qcl-Type* set to 'typeD' properties on active DL BWP(s) of one or more cells, and
- is provided *twoQCLTypeDforPDCCHRepetition*

the UE monitors PDCCHs only in a first CORESET with *qcl-Type* set to first 'typeD' properties and, if any, in a second CORESET with *qcl-Type* set to second 'typeD' properties that are different than the first 'typeD' properties, and in any other CORESET from the multiple CORESETs with corresponding *qcl-Type* set to either the first 'typeD' properties or to the second 'typeD' properties
- the first CORESET corresponds to the CSS set with the lowest index in the cell with the lowest index containing CSS sets, if any; otherwise, to the USS set with the lowest index in the cell with lowest index
- excluding CSS sets and USS sets associated with CORESETs with *qcl-Type* set to first 'typeD' properties, the second CORESET corresponds to the CSS set with the lowest index in the cell with the lowest index containing CSS sets, if any; otherwise, to the USS set with the lowest index in the cell with lowest index, where the CSS set or the USS set includes *searchSpaceLinkingId* with same value as any CSS set or any USS set associated with CORESETs with *qcl-Type* set to first 'typeD' properties
- the lowest USS set index is determined over all USS sets with at least one PDCCH candidate in overlapping PDCCH monitoring occasions

If a UE
- is configured for single cell operation or for operation with carrier aggregation in a same frequency band,
- monitors PDCCH candidates in overlapping PDCCH monitoring occasions in multiple CORESETs that have been configured with same or different *qcl-Type* set to 'typeD' properties on active DL BWP(s) of one or more cells,
- one or more CORESETs have two activated TCI states, and
- reports *sfn-QCL-TypeD-Collision-twoTCI*

the UE monitors PDCCHs only in a CORESET with a first *qcl-Type* set to first 'typeD' properties and, if any, a second *qcl-Type* set to second 'typeD' properties that are different than the first 'typeD' properties, and in any other CORESET from the multiple CORESETs with corresponding *qcl-Type* set to the first 'typeD' properties and/or to the second 'typeD' properties
- the CORESET corresponds to the CSS set with the lowest index in the cell with the lowest index containing CSS, if any; otherwise, to the USS set with the lowest index in the cell with lowest index
- the lowest USS set index is determined over all USS sets with at least one PDCCH candidate in overlapping PDCCH monitoring occasions

For the purpose of determining the CORESET, a SS/PBCH block is considered to have different QCL 'typeD' properties than a CSI-RS.

For the purpose of determining the CORESET, a first CSI-RS associated with a SS/PBCH block in a first cell and a second CSI-RS in a second cell that is also associated with the SS/PBCH block are assumed to have same QCL 'typeD' properties.

Embodiment #4-2: A first PUCCH resource/resource set related to mode #A and a second PUCCH resource/resource set related to mode #B may be configured separately. In this case, when mode #A is activated, the UE may transmit UCI through the first PUCCH resource, and when mode #B is activated, the UE may transmit UCI through the second PUCCH resource.

[Embodiment #5] A reception/transmission scheme for a DL/UL signal/channel or for a DL/UL signal/channel linked to a corresponding TCI state, in a case where the reference signal (e.g., SSB, CSI-RS, or SRS) linked to the DL/UL signal/channel or TCI state is invalid due to the activation of a specific mode.

As the base station enters NES mode, turning certain spatial elements on/off may result in invalid reference signals or TCI states.

Emboiment #5-1: Reception/transmission for a DL/UL signal/channel related to an invalid SSB, CSI-RS, SRS, or a TCI state or TCI UL state index related to at least one of them may not be performed. Alternatively, the UE may ignore or may not expect a reception/transmission indication from the base station for the corresponding DL/UL signal/channel. Alternatively, when TCI state(s) or TCI UL state index(es) corresponding to mode #A are pre-configured/indicated and TCI state(s) or TCI UL state index(es) corresponding to mode #B are pre-configured/indicated, if in a mode #A (or mode #B) situation, TCI state(s) or TCI UL state index(es) corresponding to mode #B (or mode #A) are configured/indicated for a DL/UL signal/channel to be received or transmitted, the UE may not perform transmission/reception for the corresponding DL/UL signal/channel, or may ignore or may not expect a reception/transmission indication from the base station.

Embodiment #5-2: Reception/transmission of a DL/UL signal/channel related to an invalid SSB, CSI-RS, SRS, or a TCI state or TCI UL state index related to at least one of them may be performed based on a predetermined rule.

For example, when TCI state index #n is indicated for reception of a specific PDSCH, if the DL RS, which is a QCL resource related to the TCI state index #n, becomes invalid, reception/transmission of the DL/UL signal/channel may be performed as follows. Reception/transmission of the DL/UL signal/channel may be performed according to the TCI state of the PDCCH where the DCI scheduling the corresponding PDSCH is found. Alternatively, reception/transmission of the DL/UL signal/channel may be performed according to a pre-configured/defined default TCI state. Alternatively, reception/transmission of DL/UL signals/channels may be performed according to the TCI state corresponding to the lowest or highest CORESET index received immediately before the PDSCH or the DCI scheduling the PDSCH. Alternatively, reception/transmission of the DL/UL signal/channel may be performed according to the TCI state corresponding to the lowest or highest CORESET index most recently received among CORESETs related to the activated mode.

As another example, for periodic or semi-persistent DL/UL signals/channels (e.g., P/SP-CSI-RS, P/SP-SRS, P/SP PRS (positioning RS), periodic PUCCH, SP-CSI on PUSCH/PUCCH, SPS PDSCH, CG PUSCH, etc.), when the related DL/UL RS or TCI (UL) state becomes invalid, Opt1) reception/transmission of DL/UL signals/channels may be suspended and then restored when a valid state is reached, or Opt2) reception/transmission of DL/UL signals/channels may be considered released.

Embodiment #5-3: Regarding reception of a repeated transmission DL/UL signal/channel (e.g., PDCCH, PDSCH, PUSCH, PUCCH, CSI-RS, SRS, etc.) related to an invalid SSB, CSI-RS, SRS, or a TCI state or TCI UL state index related to at least one of them, when the related DL/UL RS or TCI (UL) state becomes invalid during repetition, when the related DL/UL RS or TCI (UL) state changes, or when mode switching occurs, the repeated transmission DL/UL signal/channel may be processed as follows. OptA) The repetition may be stopped. OptB) The repetition may continue according to a predetermined rule. OptC) The repetition may continue in the same manner as before a specific mode is activated. OptD) The repetition may be performed based on the DL/UL RS or TCI (UL) state related to the changed mode. OptE) The repeated transmission may be omitted only when the DL/UL RS or TCI (UL) state related to the repeated transmission DL/UL signal/channel is invalid, and the repeated transmission may be performed as configured/indicated when it is valid. This method may also be extended to a case where a plurality of PDSCHs/PUSCHs delivering different transport blocks are scheduled through one DCI, such that the OptA/B/C/D/E described above may be applied to each PDSCH/PUSCH. When TCI state(s) or TCI UL state index(es) corresponding to mode #A are pre-configured/indicated and TCI state(s) or TCI UL state index(es) corresponding to mode #B are pre-configured/indicated, in the case where the TCI state or TCI UL state index(es) corresponding to mode #B (or mode #A) is configured/indicated for a DL/UL signal/channel received or transmitted in mode #A (or mode #B), the above may be defined as a "state in which the TCI (UL) state is invalid".

Embodiment #5-4: When the related TCI (UL) state becomes invalid during performing RSSI measurement related to a TCI state, or when the related DL/UL RS or TCI (UL) state changes, the measurement may be performed as follows. OptA) The measurement may be performed as if the TCI state is not configured. In this case, the TCI state assumed by the UE when performing the RSSI measurement may depend on UE implementation. OptB) The measurement may be performed by applying a predetermined default TCI state. OptC) The measurement may be performed in the same manner as before a specific mode is activated. OptD) After initializing the filtering for L3 measurement, the measurement may be performed based on the TCI (UL) state related to the changed mode. OptE) The RSSI measurement may be omitted only when the DL/UL RS or TCI (UL) state related to the RSSI measurement is invalid, and the RSSI measurement may be performed as configured/indicated when it is valid. When TCI state(s) or TCI UL state index(es) corresponding to mode #A are pre-configured/indicated and TCI state(s) or TCI UL state index(es) corresponding to mode #B are pre-configured/indicated, in the case where the TCI state or TCI UL state index(es) corresponding to mode #B (or mode #A) is configured/indicated for a DL/UL signal/channel received or transmitted in mode #A (or mode #B), the above may be defined as a "state in which the TCI (UL) state is invalid".

In the present disclosure, among the proposed methods, in the case of methods applied to a PDSCH or a PUSCH, when the DL/UL RS, which is a QCL resource assumed when receiving or transmitting a DM-RS of the PDSCH or the PUSCH, is changed, the DL/UL RS as the QCL resource may also be changed in the same manner when receiving or transmitting the corresponding DM-RS and the associated phase tracking reference signal (PT-RS).

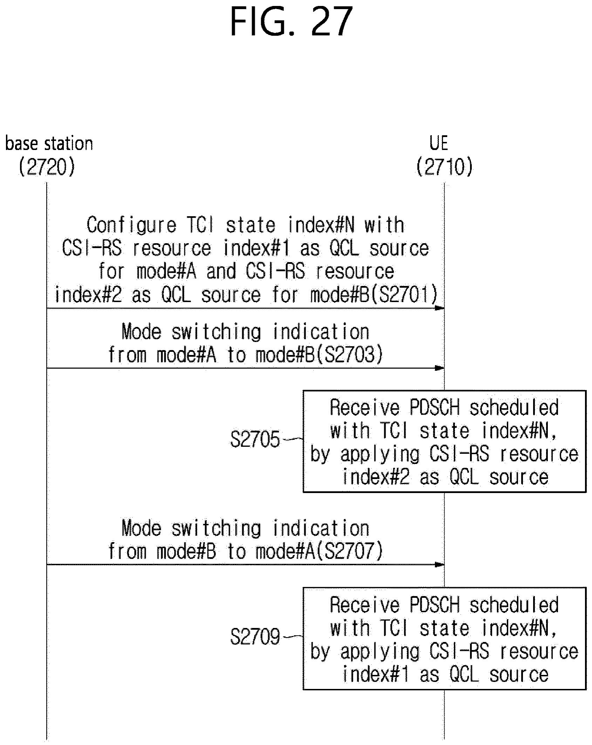

FIG. 27 illustrates an example of a procedure for changing a mode based on a mode switching indication according to an embodiment of the present disclosure. FIG. 27 exemplifies signal exchange between a UE 2710 and a base station 2720.

Referring to FIG. 27, in step S2701, the base station 2720 configures a TCI state for the UE 2710 in consideration of a spatial element mode. Specifically, in configuring one TCI state, the base station may configure different CSI-RS resource indexes for each mode. For example, CSI-RS resource index #1 may be configured as a DL RS, which is a QCL resource for mode #A, and CSI-RS resource index #2 may be configured as a DL RS, which is a QCL resource for mode #B.

In step S2703, the base station 2720 transmits a mode switching indicator to the UE 2710. The mode switching indicator indicates switching from mode #A to mode #B. Accordingly, in step S2705, the UE 2710 that has received the mode switching indicator may apply TCI based on the activated mode. For example, the UE 2710 may perform mode switching to mode #B and receive a PDSCH scheduled with TCI state index #N by applying CSI-RS resource index #2 as a QCL resource.

In step S2707, the base station 2720 transmits a mode switching indicator to the UE 2710. The mode switching indicator indicates switching from mode #B to mode #A. Accordingly, in step S2709, the UE 2710 that has received the mode switching indicator may apply TCI based on the activated mode. For example, the UE 2710 may perform mode switching to mode #A and receive a PDSCH scheduled with TCI state index #N by applying CSI-RS resource index #1 as a QCL resource.

As described with reference to FIG. 27, the UE may interpret a TCI state index differently according to switching of a spatial element mode, that is, may interpret and apply a reference RS indicated by the TCI state index differently. Here, the TCI state may be replaced with a TCI UL state or spatial relation information. In another embodiment, signaling indicating mode switching may be omitted, and mode switching may be performed according to a predefined rule. For example, mode switching may be performed according to a change of a time interval. For example, the time interval may be related to DRX/DTX operation or to a duplex mode.

As described above, the present disclosure proposes a TCI configuration and a transmission/reception technique for DL/UL signals related to the configuration in preparation for a case where the base station turns antennas on and off or adjusts power values. Through this, the base station may dynamically perform an energy-saving operation of turning off some antennas or reducing power values, thereby reducing power consumption of the base station.

The proposed methods described above may be implemented independently, but may also be implemented in a form combining (or merging) some of the proposed methods. Information on whether the proposed methods are applied (or information on rules for the proposed methods) may be defined by a rule that the base station informs the UE through a predefined signal (e.g., a physical layer signal or a higher layer signal).

The present disclosure may be embodied in other specific forms without departing from the technical idea and essential features described herein. Therefore, the above detailed description should not be interpreted in a limiting sense in all aspects and should be considered as illustrative. The scope of the present disclosure should be determined by a reasonable interpretation of the appended claims, and all modifications within the equivalent scope of the present disclosure are included in the scope of the present disclosure. In addition, claims having no explicit reference relationship in the claims may be combined to constitute an embodiment, or may be included as new claims through amendment after filing.

## INDUSTRIAL APPLICABILITY

The embodiments of the present disclosure may be applied to various wireless access systems. Examples of various wireless access systems include 3GPP (3rd Generation Partnership Project) systems or 3GPP2 systems.

The embodiments of the present disclosure may be applied not only to the above various wireless access systems but also to all technical fields to which the above various wireless access systems are applied. Furthermore, the proposed method may be applied to mmWave and THz communication systems using an ultra-high frequency band.

Additionally, the embodiments of the present disclosure may be applied to various applications such as autonomous vehicles and drones.

**Claims**

1. A method performed by a user equipment (UE) in a wireless communication system, the method comprising:

   receiving configuration information for a configuration of a transmission configuration indication (TCI)-related parameter;
   receiving control information including the TCI-related parameter;
   checking a reference reference signal (RS) indicated by the TCI-related parameter; and
   transmitting or receiving a signal related to the control information based on the reference reference signal (RS),
   wherein the configuration information indicates a first reference RS or a first radio resource applied to a first time period and indicates a second reference RS or a second radio resource applied to a second time period for one value of the TCI-related parameter.

2. The method of claim 1, wherein the transmitting or receiving the signal comprise:

   transmitting or receiving the signal by applying the first reference RS as a quasi co-location (QCL) resource during the first time period; and
   transmitting or receiving the signal by applying the second reference RS as a quasi co-location (QCL) resource during the second time period.

3. The method of claim 1, wherein the first time period corresponds to a first mode among spatial element modes distinguished by the on/off state for spatial elements of the base station, and
   wherein the second time period corresponds to a second mode among the spatial element modes.

4. The method of claim 3, wherein the configuration information configures, as one QCL resource, a first RS resource index applied based on an activation of the first mode and a second RS resource index applied based on an activation of a second mode.

5. The method of claim 4, wherein the configuration information includes qcl-typel field and qcl-type2 field, and
   wherein the first RS resource index and the second RS resource index are configured as a value of the qcl-type2 field.

6. The method of claim 4, wherein the configuration information includes referenceSignal field, and
   wherein the first RS resource index and the second RS resource index are configured as a value of the reference-Signal field.

7. The method of claim 4, wherein the configuration information includes pathlossReferenceRS field, and
   wherein the first RS resource index and the second RS resource index are configured as a value of the pathlossReferenceRS field.

8. The method of claim 3, wherein the configuration information configures, as lists of a plurality of TCI-related parameters, a first list applied based on an activation of the first mode and a second list applied based on an activation of the second mode.

9. The method of claim 8, wherein the first list includes a TCI-related parameter having indexes included in a first index set,

   wherein the second list includes a TCI-related parameter having indexes included in a second index set, and
   wherein at least one of the indexes included in the first index set is not included in the second index set.

10. The method of claim 3, wherein the configuration information configures a first radio resource applied based on an activation of the first mode and a second radio resource applied based on an activation of the second mode, for one resource domain or channel.

11. The method of claim 10, wherein the resource domain includes control resource set (CORESET) or PUCCH.

12. A user equipment (UE) in a wireless communication system, comprising:

   a transceiver; and

a processor connected to the transceiver,
wherein the processor is configured to:

receive configuration information for a configuration of a transmission configuration indication (TCI)-related parameter;
receive control information including the TCI-related parameter;
check a reference reference signal (RS) indicated by the TCI-related parameter; and
transmit or receive a signal related to the control information based on the reference reference signal (RS),
wherein the configuration information indicates a first reference RS or a first radio resource applied to a first time period and indicates a second reference RS or a second radio resource applied to a second time period for one value of the TCI-related parameter.

13. A communication device comprising:

at least one processor; and
at least one computer memory connected to the at least one processor and storing instructions that direct operations when executed by the at least one processor, the operations comprising:

receiving configuration information for a configuration of a transmission configuration indication (TCI)-related parameter;
receiving control information including the TCI-related parameter;
checking a reference reference signal (RS) indicated by the TCI-related parameter; and
transmitting or receiving a signal related to the control information based on the reference reference signal (RS),
wherein the configuration information indicates a first reference RS or a first radio resource applied to a first time period and indicates a second reference RS or a second radio resource applied to a second time period for one value of the TCI-related parameter.

14. A non-transitory computer-readable medium storing at least one instruction, the at least one instruction being executable by a processor, the at least one instruction causing a device, the processor, to:

receive configuration information for a configuration of a transmission configuration indication (TCI)-related parameter;
receive control information including the TCI-related parameter;
check a reference reference signal (RS) indicated by the TCI-related parameter; and
transmit or receive a signal related to the control information based on the reference reference signal (RS),
wherein the configuration information indicates a first reference RS or a first radio resource applied to a first time period and indicates a second reference RS or a second radio resource applied to a second time period for one value of the TCI-related parameter.

# FIG. 1

# FIG. 2

# FIG. 3

Radio Frame 10ms

Subframe 1ms

0 | 1 | 2 | 3 | 4 | 5 | 6 | 7 | 8 | 9

Fixed Size

Subframe={1,2,4} Slots

Slot

0 | 1 | 2 | 3

Slot={7,14} Symbols

Symbol

0 | 1 | 2 | 3 | 4 | 5 | 6 | 7 | 8 | 9 | 10 | 11 | 12 | 13

Size depends on subcarrier spacing

Mini-Slot
(URLLC)

Mini-Slot={2,4,7} Symbol

# FIG. 4

One Subframe

$14 \cdot 2^{\mu}$ OEDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

# FIG. 5

# FIG. 6

# FIG. 7

# FIG. 8

# FIG. 9

# FIG. 10

UE                                                    base station

CSI-Resourceconfig IE
(CSI-SSB-ResourceSetList)(S410)

SSB resource(S420)

beam report
(best SSBRI and L1-RSRP) (S430)

# FIG. 11

(a)

(b)

# FIG. 12

UE                                                    base station

NZP CSI-RS resource set IE(S610)

receive CSI resource(s) configured
as Repetition 'ON',
through same Tx beam (S620)

determine Rx beam — S630

skip CSI report (No report)(S640)

# FIG. 13

UE                                                    base station

NZP CSI-RS resource set IE(S710)

receive CSI resource(s) configured
as Repetition 'OFF',
through different Tx beam (S720)

determine best beam —S730

repot CSI (CRI/L1-RSRP)(S740)

# FIG. 14

# FIG. 15

base station RX beam sweeping

SRS#0 reception
SRS#1 reception
SRS#N reception

• • •

SRS #0, 1, ..., N

(a)

base station RX beam fixation

SRS#0
SRS#1

UE TX beam sweeping

(b)

# FIG. 16

UE                                                    base station

SRS Config. IE
(usage BM, SRS-Spatial
Relation Info)(S1010)

determine Tx beam
for SRS resource                  ~S1020

transmit SRS through
determined Tx beam (S1030)

feedback(S1040)

# FIG. 17

```
        ┌─────────────┐
        │    START    │
        └──────┬──────┘
               │
               ▼
    ┌─────────────────────────┐
    │ IDENTIFY NES SOLUTION(S)│
    └────────────┬────────────┘
                 │
                 ▼
    ┌─────────────────────────┐
    │ PERFORM SIGNALING FOR NES│
    └────────────┬────────────┘
                 │
                 ▼
    ┌─────────────────────────┐
    │PERFORM OPERATIONS FOR NES│
    └────────────┬────────────┘
                 │
                 ▼
        ┌─────────────┐
        │     END     │
        └─────────────┘
```

# FIG. 18

# FIG. 19a

Carrier #0
Subband-wise Full Duplex

FIG. 19b

Carrier #0
Spectrum-Sharing Full Duplex

# FIG. 20a

# FIG. 20b

# FIG. 21

START

check mapping relation
for spatial element mode change — S2101

check first information mapped to first mode — S2103

perform communication in first mode
based on first information — S2105

check second information mapped
to second mode — S2107

perform communication in second mode
based on second information — S2109

END

# FIG. 22

START

check mapping information between
spatial element mode and time interval — S2201

perform communication in first mode
during first time interval — S2203

perform communication in second mode
during second time interval — S2205

END

# FIG. 23

START

receive configuration information
TCI-related parameter ~ S2301

receive control information including
TCI-related parameter ~ S2303

check reference RS indicated
by TCI-related parameter ~ S2305

perform communication
based on reference RS ~ S2307

END

# FIG. 24

START

determine spatial element mode — S2401

check control information including
TCI-related parameter — S2403

check reference RS based on TCI-related
parameter and spatial element mode — S2405

perform communication
based on reference RS — S2407

END

# FIG. 25

```
                    ( START )
                        │
                        ▼
┌──────────────────────────────────────┐
│     determine spatial element mode     │ ～ S2501
└──────────────────────────────────────┘
                        │
                        ▼
┌──────────────────────────────────────┐
│     check control information including │ ～ S2503
│            TCI-related parameter        │
└──────────────────────────────────────┘
                        │
                        ▼
┌──────────────────────────────────────┐
│   determine list of TCI-related parameter │ ～ S2505
│       based on spatial element mode      │
└──────────────────────────────────────┘
                        │
                        ▼
┌──────────────────────────────────────┐
│        check reference RS based on       │ ～ S2507
│     TCI-related parameter in the list    │
└──────────────────────────────────────┘
                        │
                        ▼
┌──────────────────────────────────────┐
│          perform communication          │ ～ S2509
│         based on reference RS           │
└──────────────────────────────────────┘
                        │
                        ▼
                    ( END )
```

# FIG. 26

START

determine spatial element mode — S2601

determine radio resource
based on spatial element mode — S2603

perform communication using
the determined radio resource — S2605

END

# FIG. 27

base station
(2720)

UE
(2710)

Configure TCI state index#N with
CSI-RS resource index#1 as QCL source
for mode#A and CSI-RS resource
index#2 as QCL source for mode#B(S2701)

Mode switching indication
from mode#A to mode#B(S2703)

S2705 —

Receive PDSCH scheduled
with TCI state index#N,
by applying CSI-RS resource
index#2 as QCL source

Mode switching indication
from mode#B to mode#A(S2707)

S2709 —

Receive PDSCH scheduled
with TCI state index#N,
by applying CSI-RS resource
index#1 as QCL source

## INTERNATIONAL SEARCH REPORT

International application No.

**PCT/KR2024/095195**

### A. CLASSIFICATION OF SUBJECT MATTER

**H04W 52/02**(2009.01)i; **H04W 72/23**(2023.01)i; **H04W 72/21**(2023.01)i; **H04B 7/06**(2006.01)i; **H04B 7/08**(2006.01)i; **H04W 72/231**(2023.01)i; **H04W 72/12**(2009.01)i; **H04L 5/00**(2006.01)i

According to International Patent Classification (IPC) or to both national classification and IPC

### B. FIELDS SEARCHED

Minimum documentation searched (classification system followed by classification symbols)

H04W 52/02(2009.01); H04B 7/00(2006.01); H04L 5/00(2006.01); H04W 52/04(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: TCI 파라미터(TCI parameter), 제어 정보(control information), RS, 시간 구간(time duration), 무선 자원(radio resource)

### C. DOCUMENTS CONSIDERED TO BE RELEVANT

| Category* | Citation of document, with indication, where appropriate, of the relevant passages | Relevant to claim No. |
|---|---|---|
| A | WO 2021-208086 A1 (QUALCOMM INCORPORATED) 21 October 2021 (2021-10-21)<br>See paragraphs [0097]-[0105]; claims 1-2; and figure 13. | 1-14 |
| A | WO 2021-179284 A1 (QUALCOMM INCORPORATED) 16 September 2021 (2021-09-16)<br>See paragraphs [0094]-[0116]; claims 1-3 and 8; and figures 5-6. | 1-14 |
| A | WO 2022-205440 A1 (APPLE INC.) 06 October 2022 (2022-10-06)<br>See paragraphs [0023]-[0034]; and figure 2. | 1-14 |
| A | WO 2022-155198 A1 (OFINNO, LLC) 21 July 2022 (2022-07-21)<br>See claim 1. | 1-14 |
| A | KR 10-2019-0127557 A (ASUSTEK COMPUTER INCORPORATION) 13 November 2019 (2019-11-13)<br>See paragraphs [0687]-[0716]; and figures 5-8. | 1-14 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 May 2024** | **13 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/095195**

| Patent document cited in search report | | | Publication date (day/month/year) | Patent family member(s) | | | Publication date (day/month/year) |
|---|---|---|---|---|---|---|---|
| WO | 2021-208086 | A1 | 21 October 2021 | CN | 115398991 | A | 25 November 2022 |
| | | | | EP | 4136893 | A1 | 22 February 2023 |
| | | | | EP | 4136893 | A4 | 20 March 2024 |
| | | | | US | 2023-0164699 | A1 | 25 May 2023 |
| WO | 2021-179284 | A1 | 16 September 2021 | CN | 115245012 | A | 25 October 2022 |
| | | | | EP | 4118902 | A1 | 18 January 2023 |
| | | | | EP | 4118902 | A4 | 20 March 2024 |
| | | | | US | 2023-0118586 | A1 | 20 April 2023 |
| WO | 2022-205440 | A1 | 06 October 2022 | BR | 112023019854 | A2 | 14 November 2023 |
| | | | | CN | 115209543 | A | 18 October 2022 |
| | | | | EP | 4292360 | A1 | 20 December 2023 |
| | | | | US | 2023-0101279 | A1 | 30 March 2023 |
| WO | 2022-155198 | A1 | 21 July 2022 | CA | 3206010 | A1 | 21 July 2022 |
| | | | | CN | 117178491 | A | 05 December 2023 |
| | | | | EP | 4260506 | A1 | 18 October 2023 |
| | | | | JP | 2024-503835 | A | 29 January 2024 |
| | | | | KR | 10-2023-0130045 | A | 11 September 2023 |
| | | | | US | 2023-0292335 | A1 | 14 September 2023 |
| KR | 10-2019-0127557 | A | 13 November 2019 | CN | 110446269 | A | 12 November 2019 |
| | | | | CN | 110446269 | B | 06 December 2022 |
| | | | | EP | 3565172 | A1 | 06 November 2019 |
| | | | | EP | 3565172 | B1 | 25 November 2020 |
| | | | | ES | 2857833 | T3 | 29 September 2021 |
| | | | | JP | 2019-195167 | A | 07 November 2019 |
| | | | | JP | 6756001 | B2 | 16 September 2020 |
| | | | | TW | 201947965 | A | 16 December 2019 |
| | | | | TW | I729383 | B | 01 June 2021 |
| | | | | US | 11617195 | B2 | 28 March 2023 |
| | | | | US | 2019-0342907 | A1 | 07 November 2019 |
| | | | | US | 2023-0209563 | A1 | 29 June 2023 |

Form PCT/ISA/210 (patent family annex) (July 2022)